# EUROPEAN PATENT APPLICATION

(11) **EP 4 615 158 A1**
(43) Date of publication of application: **10.09.2025**
(21) Application number: 22964124.6
(22) Date of filing: 04.11.2022
(51) Int. Cl.: H04W 88/04

(54) **RELAY UE SELECTION AND RESELECTION METHOD AND APPARATUS FOR UE-TO-UE SCENARIO**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2022/130131
(87) International publication number: WO 2024/092823

(57) **Abstract**

Disclosed in embodiments of the present invention are a relay UE selection and reselection method and apparatus for a UE-to-UE scenario. The method comprises: a first UE determines candidate relay UEs according to a first selection condition; and the first UE determines a selected or reselected target relay UE according to the candidate relay UEs, wherein the first selection condition comprises any one of the following: selecting, as candidate relay UEs, relay UEs of which a notification message or a neighbor cell list comprises a terminal identifier of a second UE; selecting, as candidate relay UEs, relay UEs of which a sidelink reference signal received power (SL-RSRP) or a sidelink discovery reference signal received power (SD-RSRP) satisfies a threshold condition; and selecting, as candidate relay UEs, relay UEs of which a notification message or a neighbor cell list comprises a terminal identifier of a second UE and an SL-RSRP or an SD-RSRP satisfies a threshold condition. By implementing the embodiments of the present invention, the problem of how to select and reselect a relay UE under a UE-to-UE scenario can be solved, such that the normal communication of a terminal device can be ensured.

## Description

### TECHNICAL FIELD

The present disclosure relates to the field of communication technologies, and in particular to a method and an apparatus for relay user equipment (UE) selection and reselection for a UE-to-UE scenario.

### BACKGROUND

In order to support direct communication between a user equipment (UE) and another UE, a sidelink (SL) communication mode is introduced, in which an interface between the UEs is PC-5. There are three transmission modes supported by the sidelink according to a correspondence relationship between a sending UE and a receiving UE, such as unicast, multicast and broadcast. The sending UE sends sidelink control information (SCI) on a physical sidelink control channel (PSCCH) and sends a second-stage SCI on a physical sidelink shared channel (PSSCH), in which a resource location of transmission data, a source, a target identifier, etc., are carried. After receiving the SCIs, the receiving UE determines, according to a source UE identifier and a target UE identifier, whether to receive corresponding data and which process corresponds to the identifiers. In the unicast, each UE corresponds to one destination identifier; in the multicast, each UE may belong to one or more groups, each group corresponds to one destination identifier; and in the broadcast, all UEs correspond to at least one destination identifier.

A UE may not be directly connected to a base station, and may realize communication with the base station through a relay of another UE, in which the UE that is not connected to the base station is referred to as a remote UE, and the UE providing the relay function is referred to as a relay UE. One scenario is that UE A may not be directly connected to UE B, and UE A is connected to UE B through the relay of UE C. The UE A and the UE B are the remote UEs, the UE C providing the relay function is the relay UE, and all UEs communicate through sidelink unicast. This structure is referred to as U2U (UE to UE) relay.

However, in related art, there is currently no effective means for relay UE selection and reselection in the U2U scenario.

### SUMMARY

Embodiments of the present disclosure provide a method and an apparatus for relay user equipment (UE) selection and reselection method for a UE-to-UE scenario, which is applicable to the fields of Internet of Vehicles, such as Vehicle to Everything (V2X) communication, Long Term Evolution-Vehicle (LTE-V), Vehicle to Vehicle (V2V) communication, or the like, or may be used in the fields of intelligent driving, intelligent networked vehicles, etc., and can solve the problem of how to select and reselect a relay UE in the UE-to-UE (U2U) scenario, thereby ensuring normal communication of the UE.

According to a first aspect, the embodiments of the present disclosure provide a method for relay UE selection and reselection for a UE-to-UE scenario. The method is performed by a first UE, and the method includes:
determining candidate relay UEs according to a first selection condition; and
determining a selected or reselected target relay UE according to the candidate relay UEs;
in which the first selection condition includes one of:
selecting a relay UE including a UE identifier of a second UE in a notification message or a neighboring cell list as a candidate relay UE, in which the second UE is a target communication UE for the first UE, and the first UE communicates with the second UE through the relay UE;
selecting a relay UE with sidelink reference signal received power (SL-RSRP) or sidelink discovery reference signal received power (SD-RSRP) satisfying a threshold condition as a candidate relay UE; or
selecting a relay UE including a UE identifier of a second UE in a notification message or a neighboring cell list and with an SL-RSRP or an SD-RSRP satisfying a threshold condition as a candidate relay UE.

In this technical solution, the first UE can select or reselect the target relay UE according to the relay selection condition, which may solve the problem of how to select and reselect the relay UE in the U2U scenario, thereby ensuring normal communication of the UE.

In an implementation, the relay UE with the SL-RSRP or the SD-RSRP satisfying the threshold condition includes one of:
a relay UE with an SL-RSRP or an SD-RSRP between the relay UE and the first UE satisfying a first threshold condition;
a relay UE with an SL-RSRP or an SD-RSRP between the relay UE and the second UE satisfying a second threshold condition; or
a relay UE with an SL-RSRP or an SD-RSRP between the relay UE and the first UE satisfying a first threshold condition and with an SL-RSRP or an SD-RSRP between the relay UE and the second UE satisfying a second threshold condition.

In a possible implementation, the SL-RSRP or the SD-RSRP satisfying the threshold condition includes: the SL-RSRP or the SD-RSRP being greater than or equal to a predefined threshold; or the SL-RSRP or the SD-RSRP being greater than a predefined threshold by at least one hysteresis parameter value.

In a possible implementation, the predefined threshold includes a first predefined threshold and a second predefined threshold, in which the first predefined threshold is a lowest threshold, and the second predefined threshold is a highest threshold; and
the SL-RSRP or the SD-RSRP being greater than or equal to the predefined threshold includes:
the SL-RSRP or the SD-RSRP being greater than or equal to the first predefined threshold and less than or equal to the second predefined threshold;
the SL-RSRP or the SD-RSRP being greater than the predefined threshold by at least one hysteresis parameter value includes:
the SL-RSRP or the SD-RSRP being greater than the first predefined threshold by at least one hysteresis parameter value and less than the second predefined threshold by at least one hysteresis parameter value.

In an implementation, determining the selected or reselected target relay UE according to the candidate relay UEs includes: selecting a candidate relay UE from the candidate relay UEs as the target relay UE based on an implementation; or selecting a plurality of relay UEs from the candidate relay UEs as the target relay UEs based on an implementation.

According to a second aspect, the embodiments of the present disclosure provide another method for relay UE selection and reselection for a UE-to-UE scenario. The method is performed by a first UE, and the method includes:
determining candidate relay UEs according to a second selection condition; and
determining a selected or reselected target relay UE according to the candidate relay UEs;
in which the second selection condition includes any one of:
   selecting a relay UE with an SL-RSRP or an SD-RSRP between the first UE and the relay UE satisfying a first threshold condition as a candidate relay UE; or
   selecting a relay UE with an SL-RSRP or an SD-RSRP between the first UE and the relay UE satisfying a first threshold condition and with an SL-RSRP or an SD-RSRP between the second UE and the relay UE satisfying a second threshold condition as a candidate relay UE;
   in which the first UE is a source remote UE in the UE-to-UE scenario, and the second UE is a target remote UE in the UE-to-UE scenario.

In this technical solution, the source remote UE can select or reselect the target relay UE according to the relay selection condition of the source remote UE, which can solve the problem of how to select and reselect the relay UE in the U2U scenario, thereby ensuring normal communication of the UE.

In an implementation, determining the candidate relay UEs according to the second selection condition includes:
sending a discovery request message to the second UE through at least one first relay UE;
receiving a discovery response message sent by at least one second relay UE, in which the at least one second relay UE is selected by the second UE from the at least one first relay UE and is a relay UE with an SL-RSRP or an SD-RSRP between the relay UE and the second UE satisfying the second threshold condition; and
receiving a discovery response message sent by at least one second relay UE, in which the at least one second relay UE is selected by the second UE from the at least one first relay UE and is a relay UE with an SL-RSRP or an SD-RSRP between the relay UE and the second UE satisfying the second threshold condition.

In a possible implementation, determining the candidate relay UEs according to the second selection condition includes:
acquiring the SL-RSRP or the SD-RSRP between the second UE and the relay UE;
selecting all relay UEs with the SL-RSRP or the SD-RSRP between the relay UE and the first UE satisfying the first threshold condition and with the SL-RSRP or the SD-RSRP between the relay UE and the second UE satisfying the second threshold condition as the candidate relay UEs.

In a possible implementation, determining the selected or reselected target relay UE according to the candidate relay UEs includes:
selecting a candidate relay UE from the candidate relay UEs as the target relay UE based on an implementation; or
selecting a plurality of relay UEs from the candidate relay UEs as the target relay UEs based on an implementation.

According to a third aspect, the embodiments of the present disclosure provides another method for relay UE selection and reselection for a UE-to-UE scenario. The method is performed by a second UE, and the method includes:
receiving a discovery request message sent by at least one first relay UE;
selecting, from the at least one first relay UE, a relay UE with an SL-RSRP or an SD-RSRP between the relay UE and the second UE satisfying a second threshold condition as a second relay UE; and
sending a discovery response message to a first UE through the second relay UE, the second relay UE being used by the first UE for relay UE selection and reselection;
in which the first UE is a source remote UE in the UE-to-UE scenario, and the second UE is a target remote UE in the UE-to-UE scenario.

In this technical solution, the relay UE can be selected or reselected by the target remote UE according to the relay selection condition of the target remote UE to forward the discovery response message, and then on the basis of the relay UE selected or reselected by the target remote UE, the relay UE satisfying the relay selection condition of the source remote UE is selected by the source remote UE as the candidate relay UE, thereby solving the problem of how to select and reselect the relay UE in the U2U scenario, thereby ensuring normal communication of the UE.

According to a fourth aspect, the embodiments of the present disclosure provide another method for relay UE selection and reselection for a UE-to-UE scenario. The method is performed by a second UE, and the method includes:
determining candidate relay UEs according to a third selection condition; and
determining a selected or reselected target relay UE according to the candidate relay UEs;
in which the third selection condition includes any one of:
   selecting a relay UE with an SL-RSRP or an SD-RSRP between the second UE and the relay UE satisfying a second threshold condition as a candidate relay UE; or
   selecting a relay UE with an SL-RSRP or an SD-RSRP between a first UE and the relay UE satisfying a first threshold condition and with an SL-RSRP or an SD-RSRP between the second UE and the relay UE satisfying a second threshold condition as a candidate relay UE;
   in which the first UE is a source remote UE in the UE-to-UE scenario, and the second UE is a target remote UE in the UE-to-UE scenario.

In the technical solution, the target remote UE can select or reselect the target relay UE according to the relay selection condition of the target remote UE, which can solve the problem of how to select and reselect the relay UE in the U2U scenario, thereby ensuring normal communication of the UE.

In an implementation, determining the candidate relay UEs according to the third selection condition includes:
receiving a discovery request message sent by at least one third relay UE, in which the at least one third relay UE is selected by the first UE and is a relay UE with an SL-RSRP or an SD-RSRP between the relay UE and the first UE satisfying the first threshold condition; and
selecting, from the at least one third relay UE, all third relay UEs with an SL-RSRP or an SD-RSRP between the third relay UE and the second UE satisfying the second threshold condition as the candidate relay UEs.

In an implementation, determining the candidate relay UEs according to the third selection condition includes:
acquiring the SL-RSRP or the SD-RSRP between the first UE and the relay UE;
selecting all relay UEs with the SL-RSRP or the SD-RSRP between the relay UE and the first UE satisfying the first threshold condition and with the SL-RSRP or the SD-RSRP between the relay UE and the second UE satisfying the second threshold condition as the candidate relay UEs.

In a possible implementation, determining the selected or reselected target relay UE according to the candidate relay UEs includes:
selecting a candidate relay UE from the candidate relay UEs as the target relay UE based on an implementation; or
selecting a plurality of relay UEs from the candidate relay UEs as the target relay UEs based on an implementation.

According to a fifth aspect, the embodiments of the present disclosure provides another method for relay UE selection and reselection for a UE-to-UE scenario. The method is performed by a first UE, and the method includes:
selecting a relay UE with an SL-RSRP or an SD-RSRP between the relay UE and the first UE satisfying a first threshold condition as a third relay UE; and
sending a discovery request message to a second UE through the third relay UE, the third relay UE being used by the second UE for relay UE selection and reselection;
in which the first UE is a source remote UE in the UE-to-UE scenario, and the second UE is a target remote UE in the UE-to-UE scenario.

In the technical solution, the relay UE can be selected or reselected by the source remote UE according to the relay selection condition of the source remote UE to forward the discovery response message, and then on the basis of the relay UE selected or reselected by the source remote UE, the relay UE satisfying the relay selection condition of the target remote UE is selected by the target remote UE as the candidate relay UE, thereby solving the problem of how to select and reselect the relay UE in the U2U scenario, thereby ensuring normal communication of the UE.

According to a sixth aspect, the embodiments of the present disclosure provide a method for triggering relay UE selection and reselection in a UE-to-UE scenario. The method is performed by a UE, and the method includes:
in response to an SL-RSRP or an SD-RSRP between the UE and another UE satisfying a trigger condition for relay UE selection and reselection, triggering the relay UE selection and reselection.

In the technical solution, in a case that the terminal device determines that the SL-RSRP or the SD-RSRP between the UE and the other UE satisfies the trigger condition for the relay UE selection and reselection, the relay UE selection or reselection is triggered, so that the problem of selecting and reselecting the relay UE in the U2U scenario can be solved, thereby ensuring normal communication of the UE.

In an implementation, the SL-RSRP or the SD-RSRP satisfying the trigger condition for the relay UE selection and reselection includes:
the SL-RSRP or the SD-RSRP being less than or equal to a predefined threshold; or
the SL-RSRP or the SD-RSRP being less than a predefined threshold by at least one hysteresis parameter value.

In a possible implementation, the UE is a source remote UE in the UE-to-UE scenario, and the other UE is a target remote UE in the UE-to-UE scenario.

In a possible implementation, the UE is a target remote UE in the UE-to-UE scenario, and the other UE is a source remote UE in the UE-to-UE scenario.

In a possible implementation, the UE is a source remote UE or a target remote UE in the UE-to-UE scenario, and the other UE is a relay UE in the UE-to-UE scenario.

According to a seventh aspect, the embodiments of the present disclosure provide a communication apparatus, in which the communication apparatus has some or all functions for implementing the UE in the methods according to the first aspect, for example, functions of the communication apparatus may have functions in some or all of the embodiments of the present disclosure, or may have a function of separately implementing any one of the embodiments of the present disclosure. The function may be implemented by hardware, or may be implemented by hardware executing corresponding software. The hardware or the software includes one or more units or modules corresponding to the foregoing functions.

In an implementation, the structure of the communication apparatus may include a transceiving module and a processing module. The processing module is configured to support the communication apparatus in performing a corresponding function in the foregoing methods. The transceiving module is configured to support communication between the communication apparatus and another device. The communication apparatus may further include a storage module, and the storage module is configured to be coupled to the transceiving module and the processing module, and store a computer program and data that are necessary for the communication apparatus.

As an example, the processing module may be a processor, the transceiving module may be a transceiver or a communication interface, and the storage module may be a memory.

According to an eighth aspect, the embodiments of the present disclosure provide another communication apparatus, in which the communication apparatus has some or all functions for implementing the UE in the method example described in the second aspect, for example, functions of the communication apparatus may have functions in some or all of the embodiments of the present disclosure, or may have a function of separately implementing any one of the embodiments of the present disclosure. The function may be implemented by hardware, or may be implemented by hardware executing corresponding software. The hardware or the software includes one or more units or modules corresponding to the foregoing functions.

In an implementation, the structure of the communication apparatus may include a transceiving module and a processing module. The processing module is configured to support the communication apparatus in performing a corresponding function in the foregoing methods. The transceiving module is configured to support communication between the communication apparatus and another device. The communication apparatus may further include a storage module, and the storage module is configured to be coupled to the transceiving module and the processing module, and store a computer program and data that are necessary for the communication apparatus.

According to a ninth aspect, the embodiments of the present disclosure provide another communication apparatus, in which the communication apparatus has some or all functions for implementing the UE in the method example described in the third aspect, for example, functions of the communication apparatus may have functions in some or all of the embodiments of the present disclosure, or may have a function of separately implementing any one of the embodiments of the present disclosure. The function may be implemented by hardware, or may be implemented by hardware executing corresponding software. The hardware or the software includes one or more units or modules corresponding to the foregoing functions.

According to a tenth aspect, the embodiments of the present disclosure provide another communication apparatus, in which the communication apparatus has some or all functions for implementing the UE in the method example described in the fourth aspect, for example, functions of the communication apparatus may have functions in some or all of the embodiments of the present disclosure, or may have a function of separately implementing any one of the embodiments of the present disclosure. The function may be implemented by hardware, or may be implemented by hardware executing corresponding software. The hardware or the software includes one or more units or modules corresponding to the foregoing functions.

According to an eleventh aspect, the embodiments of the present disclosure provide another communication apparatus, in which the communication apparatus has some or all functions for implementing the UE in the method example described in the fifth aspect, for example, functions of the communication apparatus may have functions in some or all of the embodiments of the present disclosure, or may have a function of separately implementing any one of the embodiments of the present disclosure. The function may be implemented by hardware, or may be implemented by hardware executing corresponding software. The hardware or the software includes one or more units or modules corresponding to the foregoing functions.

According to a twelfth aspect, the embodiments of the present disclosure provide another communication apparatus, in which the communication apparatus has some or all functions for implementing the UE in the method example described in the sixth aspect, for example, functions of the communication apparatus may have functions in some or all of the embodiments of the present disclosure, or may have a function of separately implementing any one of the embodiments of the present disclosure. The function may be implemented by hardware, or may be implemented by hardware executing corresponding software. The hardware or the software includes one or more units or modules corresponding to the foregoing functions.

According to a thirteenth aspect, the embodiments of the present disclosure provide a communication apparatus. The communication apparatus includes a processor, and when the processor invokes a computer program in a memory, the method according to the first aspect is performed.

According to a fourteenth aspect, the embodiments of the present disclosure provide a communication apparatus. The communication apparatus includes a processor, and when the processor invokes a computer program in a memory, the method according to the second aspect is performed.

According to a fifteenth aspect, the embodiments of the present disclosure provide a communication apparatus. The communication apparatus includes a processor, and when the processor invokes a computer program in a memory, the method according to the third aspect is performed.

According to a sixteenth aspect, the embodiments of the present disclosure provide a communication apparatus. The communication apparatus includes a processor, and when the processor invokes a computer program in a memory, the method according to the fourth aspect is performed.

According to a seventeenth aspect, the embodiments of the present disclosure provide a communication apparatus. The communication apparatus includes a processor, and when the processor invokes a computer program in a memory, the method according to the fifth aspect is performed.

According to an eighteenth aspect, the embodiments of the present disclosure provide a communication apparatus. The communication apparatus includes a processor, and when the processor invokes a computer program in a memory, the method according to the sixth aspect is performed.

According to a nineteenth aspect, the embodiments of the present disclosure provide a communication apparatus. The communication apparatus includes a processor and a memory, and the memory stores a computer program; and the processor executes a computer program stored in the memory, so that the communication apparatus performs the method according to the first aspect.

According to a twentieth aspect, the embodiments of the present disclosure provide a communication apparatus. The communication apparatus includes a processor and a memory, and the memory stores a computer program; and the processor executes a computer program stored in the memory, so that the communication apparatus performs the method according to the second aspect.

According to a twenty-first aspect, the embodiments of the present disclosure provide a communication apparatus. The communication apparatus includes a processor and a memory, and the memory stores a computer program; and the processor executes a computer program stored in the memory, so that the communication apparatus performs the method according to the third aspect.

According to a twenty-second aspect, the embodiments of the present disclosure provide a communication apparatus. The communication apparatus includes a processor and a memory, and the memory stores a computer program; and the processor executes a computer program stored in the memory, so that the communication apparatus performs the method according to the fourth aspect.

According to a twenty-third aspect, the embodiments of the present disclosure provide a communication apparatus. The communication apparatus includes a processor and a memory, and the memory stores a computer program; and the processor executes a computer program stored in the memory, so that the communication apparatus performs the method according to the fifth aspect.

According to a twenty-fourth aspect, the embodiments of the present disclosure provide a communication apparatus. The communication apparatus includes a processor and a memory, and the memory stores a computer program; and the processor executes a computer program stored in the memory, so that the communication apparatus performs the method according to the sixth aspect.

According to a twenty-fifth aspect, the embodiments of the present disclosure provide a communication apparatus, including a processor and an interface circuit, in which the interface circuit is configured to receive a code instruction and transmit the code instruction to the processor, and the processor is configured to run the code instruction to cause the apparatus to perform the method according to the first aspect.

According to a twenty-sixth aspect, the embodiments of the present disclosure provide a communication apparatus, including a processor and an interface circuit, in which the interface circuit is configured to receive a code instruction and transmit the code instruction to the processor, and the processor is configured to run the code instruction to cause the apparatus to perform the method according to the second aspect.

According to a twenty-seventh aspect, the embodiments of the present disclosure provide a communication apparatus, including a processor and an interface circuit, in which the interface circuit is configured to receive a code instruction and transmit the code instruction to the processor, and the processor is configured to run the code instruction to cause the apparatus to perform the method according to the third aspect.

According to a twenty-eighth aspect, the embodiments of the present disclosure provide a communication apparatus, including a processor and an interface circuit, in which the interface circuit is configured to receive a code instruction and transmit the code instruction to the processor, and the processor is configured to run the code instruction to cause the apparatus to perform the method according to the fourth aspect.

According to a twenty-ninth aspect, the embodiments of the present disclosure provide a communication apparatus, including a processor and an interface circuit, in which the interface circuit is configured to receive a code instruction and transmit the code instruction to the processor, and the processor is configured to run the code instruction to cause the apparatus to perform the method according to the fifth aspect.

According to a thirty-third aspect, the embodiments of the present disclosure provide a communication apparatus, including a processor and an interface circuit, in which the interface circuit is configured to receive a code instruction and transmit the code instruction to the processor, and the processor is configured to run the code instruction to cause the apparatus to perform the method according to the sixth aspect.

According to a thirty-first aspect, the embodiments of the present disclosure provide a computer-readable storage medium, configured to store instructions used by the UE, when the instructions are executed, the UE is caused to perform the method according to the first aspect.

According to a thirty-second aspect, the embodiments of the present disclosure provide a readable storage medium, configured to store instructions used by the UE, when the instructions are executed, the network device is caused to perform the method according to the second aspect.

According to a thirty-third aspect, the embodiments of the present disclosure provide a readable storage medium, configured to store instructions used by the UE, when the instructions are executed, the network device is caused to perform the method according to the third aspect.

According to a thirty-fourth aspect, the embodiments of the present disclosure provide a readable storage medium, configured to store instructions used by the UE, when the instructions are executed, the network device is caused to perform the method according to the fourth aspect.

According to a thirty-fifth aspect, the embodiments of the present disclosure provide a readable storage medium, configured to store instructions used by the UE, when the instructions are executed, the network device is caused to perform the method according to the fifth aspect.

According to a thirty-sixth aspect, the embodiments of the present disclosure provide a readable storage medium, configured to store instructions used by the UE, when the instructions are executed, the network device is caused to perform the method according to the sixth aspect.

According to a thirty-seventh aspect, the present disclosure further provides a computer program product including a computer program, and when the computer program product runs on a computer, the computer is enabled to perform the method according to the first aspect.

According to a thirty-eighth aspect, the present disclosure further provides a computer program product including a computer program, and when the computer program product runs on a computer, the computer is enabled to perform the method according to the second aspect.

According to a thirty-ninth aspect, the present disclosure further provides a computer program product including a computer program, and when the computer program product runs on a computer, the computer is enabled to perform the method according to the third aspect.

According to a fourth aspect, the present disclosure further provides a computer program product including a computer program, and when the computer program product runs on a computer, the computer is enabled to perform the method according to the fourth aspect.

According to a forty-first aspect, the present disclosure further provides a computer program product including a computer program, and when the computer program product runs on a computer, the computer is enabled to perform the method according to the fifth aspect.

According to a forty-second aspect, the present disclosure further provides a computer program product including a computer program, and when the computer program product runs on a computer, the computer is enabled to perform the method according to the sixth aspect.

According to a forty-third aspect, the present disclosure provides a computer program, which, when run on a computer, causes the computer to perform the method described above.

### BRIEF DESCRIPTION OF THE DRAWINGS

In order to more clearly illustrate the technical solutions in the embodiments of the present disclosure or the background technologies, the drawings required for use in the embodiments of the present disclosure or the background technologies will be described below.
FIG. 1 is a schematic flowchart of a method for relay user equipment (UE) selection and reselection for a UE-to-UE scenario according to an embodiment of the present disclosure.
FIG. 2 is a flowchart of another method for relay UE selection and reselection for a UE-to-UE scenario according to an embodiment of the present disclosure.
FIG. 3 is a flowchart of another method for relay UE selection and reselection for a UE-to-UE scenario according to an embodiment of the present disclosure.
FIG. 4 is a flowchart of another method for relay UE selection and reselection for a UE-to-UE scenario according to an embodiment of the present disclosure.
FIG. 5 is a flowchart of yet another method for relay UE selection and reselection for a UE-to-UE scenario according to an embodiment of the present disclosure.
FIG. 6 is a flowchart of a method for triggering relay UE selection and reselection for a UE-to-UE scenario according to an embodiment of the present disclosure.
FIG. 7 is a schematic structural diagram of a communication apparatus according to an embodiment of the present disclosure.
FIG. 8 is a schematic structural diagram of another communication apparatus according to an embodiment of the present disclosure.

### DETAILED DESCRIPTION

Embodiments of the present disclosure are described in detail below, and examples of the embodiments are shown in the accompanying drawings, in which the same or similar reference numerals refer to the same or similar elements or elements with the same or similar functions throughout. The embodiments described below with reference to the accompanying drawings are exemplary and are intended to explain the present disclosure and are not to be construed as limiting the present disclosure. In the description of the present disclosure, unless otherwise stated, "/" means or, for example, A/B can represent A or B; "and/or" herein is merely an association relationship describing the associated objects, indicating that there may be three relationships, for example, A and/or B may indicate that A exists alone, both A and B exist, and B exists alone.

The terms used in the embodiments of the present disclosure are merely for the purpose of describing particular embodiments, and are not intended to limit the embodiments of the present disclosure. The singular forms "a", "an" and "the" used in the embodiments of the present disclosure and the appended claims are also intended to include plural forms, unless the context clearly indicates other meanings.

It should be understood that although the terms first, second, third, etc. may be used in the embodiments of the present disclosure to describe various information, these information should not be limited to these terms. These terms are only used to distinguish the same type of information from each other. For example, without departing from the scope of the embodiments of the present disclosure, the first information may also be referred to as second information, and similarly, the second information may also be referred to as first information. Depending on the context, the words "if" as used herein May be interpreted as "when", "in a case that", or "in response to determining that".

The embodiments of the present disclosure are described in detail below, and examples of the embodiments are shown in the accompanying drawings, in which the same or similar reference numerals refer to the same or similar elements throughout. The embodiments described below with reference to the drawings are exemplary and are intended to explain the present disclosure and are not to be construed as limiting the present disclosure.

In order to support direct communication between user equipments (UE), a sidelink (SL) communication mode is introduced, in which an interface between the UEs is PC-5. There are three transmission modes supported by the sidelink according to a correspondence relationship between a sending UE and a receiving UE, such as unicast, multicast and broadcast. The sending UE sends sidelink control information (SCI) on a physical sidelink control channel (PSCCH) and sends a second-stage SCI on a physical sidelink shared channel (PSSCH), in which a resource location of transmission data, a source, a target identifier, etc., are carried. After receiving the SCIs, the receiving UE determines, according to a source UE identifier and a target UE identifier, whether to receive corresponding data and which process corresponds to the identifiers. In the unicast, each UE corresponds to one destination identifier; in the multicast, each UE may belong to one or more groups, each group corresponds to one destination identifier; and in the broadcast, all UEs correspond to at least one destination identifier.

A UE may not be directly connected to a base station, and may realize communication with the base station through a relay of another UE, in which the UE that is not connected to the base station is referred to as a remote UE, and the UE providing the relay function is referred to as a relay UE. One scenario is that UE A may not be directly connected to UE B, and UE A is connected to UE B through the relay of UE C. The UE A and the UE B are the remote UEs, the UE C providing the relay function is the relay UE, and all UEs communicate through sidelink unicast. This structure is referred to as U2U (UE to UE) relay.

However, in related art, there is currently no effective means for relay UE selection and reselection in the U2U scenario.

To this end, the embodiments of the present disclosure provide a method for relay UE selection and reselection in a UE-to-UE scenario, which can solve the problem of how to select and reselect a relay UE in the UE-to-UE (U2U) scenario by selecting or reselecting the relay UE according to a relay selection condition, thereby ensuring normal communication of the UEs.

It should be noted that the UE in the embodiments of the present disclosure is an entity for receiving or transmitting a signal, such as a mobile phone, for a user. The UE may also be referred to as a terminal device, a terminal, a mobile station (MS), a mobile terminal device (MT), or the like. The UE may be a vehicle with a communication function, a smart vehicle, a mobile phone, a wearable device, a Pad, a computer with a wireless transceiving function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, and a wireless terminal in smart home. A specific technology and a specific device form used by the UE are not limited in the embodiments of the present disclosure.

The following describes in detail the method and the apparatus for relay UE selection and reselection for a UE-to-UE scenario provided in the present disclosure with reference to the accompanying drawings.

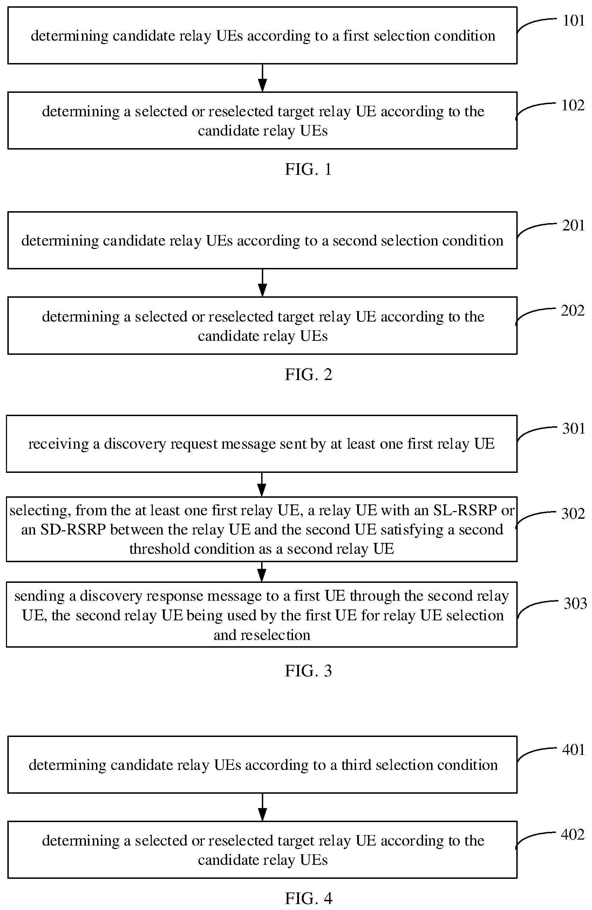

FIG. 1 is a schematic flowchart of a method for relay UE selection and reselection for a UE-to-UE scenario according to an embodiment of the present disclosure. It should be noted that the method may be performed by a first UE. As shown in FIG. 1, the method may include but is not limited to the following steps.

In step 101, candidate relay UEs are determined according to a first selection condition.

In an embodiment of the present disclosure, the first selection condition may include any one of the following items 1) to 3):
1) selecting a relay UE including a UE identifier of a second UE in a notification message or a neighboring cell list as a candidate relay UE;
2) selecting a relay UE with sidelink reference signal received power (SL-RSRP) or sidelink discovery reference signal received power (SD-RSRP) satisfying a threshold condition as a candidate relay UE;
3) selecting a relay UE including a UE identifier of a second UE in a notification message or a neighboring cell list and with an SL-RSRP or an SD-RSRP satisfying a threshold condition as a candidate relay UE.

In the embodiments, for example, the first selection condition including selecting the relay UE that includes the UE identifier of the second UE in the notification message or the neighbor list as the candidate relay UE, the first UE may select the relay UE satisfying the first condition as the candidate relay UE, that is, the first UE may select the relay UE including the UE identifier of the second UE in the notification message or the neighbor list as the candidate relay UE. A possible implementation of the UE identifier of the second UE is a source layer 2 address of the second UE, or an application layer identifier, other implementations are not limited to this. Optionally, the second UE is a target communication UE for the first UE, and the first UE communicates with the second UE through the relay UE.

It should be noted that, for the U2U scenario, there are two modes for sending a discovery request message, which are mode A and mode B respectively. For mode A, a U2U relay UE periodically broadcasts a notification message, and the notification message carries the UE identifier of the target UE, or the neighbor list in the notification message carries the UE identifier of the target UE. The source terminal monitors the notification message and selects one U2U relay UE as the relay UE. As an example, for mode A, the first UE needs to determine that the notification message broadcast by the relay UE includes the UE identifier of the second UE, and the first UE may use the relay UE as the candidate relay UE.

In the embodiments, for example, the first selection condition includes selecting the relay UE with the SL-RSRP or the SD-RSRP satisfying the threshold condition as the candidate relay UE, the first UE may select the relay UE satisfying the first condition as the candidate relay UE, that is, the first UE may select the relay UE with the SL-RSRP or the SD-RSRP satisfying the threshold condition as the candidate relay UE.

In the embodiments, for example, the first selection condition includes selecting the relay UE including the UE identifier of the second UE in the notification message or the neighboring cell list and with the SL-RSRP or the SD-RSRP satisfying the threshold condition as the candidate relay UE, the first UE may the relay UE satisfying the first selection condition as the candidate relay UE, that is, the first UE may select the relay UE including the UE identifier of the second UE in the notification message or the neighboring cell list and with the SL-RSRP or the SD-RSRP satisfying the threshold condition as the candidate relay UE.

In the embodiments of the present disclosure, the SL-RSRP or the SD-RSRP satisfying the threshold condition may include: the SL-RSRP or the SD-RSRP being greater than or equal to a predefined threshold; or the SL-RSRP or the SD-RSRP being greater than a predefined threshold by at least one hysteresis parameter value. For example, the SL-RSRP or the SD-RSRP may be understood as signal strength of the sidelink between the first UE and a relay UE, and the first UE may select a relay UE with the signal strength between the relay UE and the first UE satisfying the threshold condition as the candidate relay UE. For example, the first UE may select the relay UE with the signal strength between the relay UE and the first UE being greater than or equal to the predefined threshold as the candidate relay UE, or the first UE may select the relay UE with the signal strength between the relay UE and the first UE being greater than the predefined threshold by at least one hysteresis parameter value as the candidate relay UE. In a possible implementation, the network device configures only the predefined threshold, and the SL-RSRP or the SD-RSRP satisfying the threshold condition may be that the SL-RSRP or the SD-RSRP is greater than or equal to the predefined threshold. In another possible implementation, when the network device configures the predefined threshold and the hysteresis parameter value, the SL-RSRP or the SD-RSRP satisfying the threshold condition may be that the SL-RSRP or the SD-RSRP is greater than or equal to the predefined threshold by at least one hysteresis parameter value.

It should be noted that, in some embodiments of the present disclosure, if the SL-RSRP and the SD-RSRP between the UEs may be acquired, the acquired SL-RSRP may be compared with the predefined threshold, or the acquired SD-RSRP may be compared with the predefined threshold, or the UE may select one of the SL-RSRP/SD-RSRP to be compared with the predefined threshold. If the UE cannot acquire the SL-RSRP between the UEs, the UE may only acquire the SD-RSRP between the UEs, and the UE compares the acquired SD-RSRP with the predefined threshold. If the UE cannot acquire the SD-RSRP between the UEs, the UE may only acquire the SL-RSRP between the UEs, and the UE compares the acquired SL-RSRP with the predefined threshold.

For example, if the SL-RSRP and the SD-RSRP between the first UE and the relay UE may be acquired, the first UE may compare the acquired SL-RSRP with the predefined threshold to determine whether the threshold condition is satisfied, or the first UE may compare the acquired SD-RSRP with the predefined threshold to determine whether the threshold condition is satisfied, or the first UE implements selecting one from the SL-RSRP and the SD-RSRP to be compared with the predefined threshold to determine whether the threshold condition is satisfied. If the first UE cannot acquire the SL-RSRP between the first UE and the relay UE, the first UE may only acquire the SD-RSRP between the first UE and the relay UE, and the first UE compares the acquired SD-RSRP with the predefined threshold to determine whether the threshold condition is satisfied. If the first UE cannot acquire the SD-RSRP between the first UE and the relay UE, the first UE can only acquire the SL-RSRP between the first UE and the relay UE, and the first UE compares the acquired SL-RSRP with the predefined threshold to determine whether the threshold condition is satisfied.

It should be noted that, in the embodiments of the present disclosure, the predefined threshold may be configured or preconfigured by the network device for the UE. If the UE is in-coverage, the UE may acquire the predefined threshold configured by the network device by using a dedicated RRC signaling or an SIB. If the UE is out-of-coverage, the UE may acquire the predefined threshold through preconfiguring.

In an embodiment of the present disclosure, the predefined threshold includes a first predefined threshold and a second predefined threshold, in which the first predefined threshold is the lowest threshold, and the second predefined threshold is the highest threshold. In an embodiment of the present disclosure, the SL-RSRP or the SD-RSRP being greater than or equal to the predefined threshold may include: the SL-RSRP or the SD-RSRP being greater than or equal to the first predefined threshold and less than or equal to a second predefined threshold. The SL-RSRP or SD-RSRP being greater than the predefined threshold by at least one hysteresis parameter value may include: the SL-RSRP or the SD-RSRP being greater than the first predefined threshold by at least one hysteresis parameter value and less than the second predefined threshold by at least one hysteresis parameter value.

In a possible implementation, the network device may configure two predefined thresholds, for example, the first predefined threshold and the second predefined threshold, and the first UE may select the relay UE with the SL-RSRP or the SD-RSRP being greater than or equal to the first predefined threshold and less than or equal to the second predefined threshold as the candidate relay UE. In another possible implementation, the first UE may select the relay UE with the SL-RSRP or the SD-RSRP being greater than the first predefined threshold by at least one hysteresis parameter value and less than the second predefined threshold by at least one hysteresis parameter value as the candidate relay UE.

In some embodiments of the present disclosure, the relay UE with the SL-RSRP or the SD-RSRP satisfying the threshold condition includes any one of the following items 1) to 3):
1) a relay UE with an SL-RSRP or an SD-RSRP between the relay UE and the first UE satisfying a first threshold condition;
2) a relay UE with an SL-RSRP or an SD-RSRP between the relay UE and the second UE satisfying a second threshold condition; or
3) a relay UE with an SL-RSRP or an SD-RSRP between the relay UE and the first UE satisfying a first threshold condition and with an SL-RSRP or an SD-RSRP between the relay UE and the second UE satisfying a second threshold condition.

In an embodiment of the present disclosure, for example, the first selection condition includes selecting the relay UE with the SL-RSRP or the SD-RSRP satisfying the threshold condition, in which the relay UE with the SL-RSRP or the SD-RSRP satisfying the threshold condition includes the relay UE with the SL-RSRP or the SD-RSRP between the relay UE and the first UE satisfying the first threshold condition, the first UE may select the relay UE with the SL-RSRP or the SD-RSRP between the relay UE and the first UE satisfying the first threshold condition as the candidate relay UE. In an implementation, the network device may configure one predefined threshold, the first UE may select the relay UE with the SL-RSRP or the SD-RSRP between the relay UE and the first UE being greater than or equal to the predefined threshold as the candidate relay UE, or the first UE may select the relay UE with the SL-RSRP or the SD-RSRP between the relay UE and the first UE being greater than the predefined threshold by at least one hysteresis parameter value as the candidate relay UE. In another implementation, the network device may configure two predefined thresholds, such as the lowest threshold and the highest threshold. As an example of a possible implementation, the first UE may select the relay UE with the SL-RSRP or the SD-RSRP between the relay UE and the first UE being greater than or equal to the lowest threshold and less than or equal to the highest threshold as the candidate relay UE. As an example of another possible implementation, the first UE may select the relay UE with the SL-RSRP or the SD-RSRP between the relay UE and the first UE being greater than the lowest threshold by at least one hysteresis parameter value and less than the highest threshold by at least one hysteresis parameter value as the candidate relay UE.

In an embodiment of the present disclosure, for example, the first selection condition includes selecting the relay UE with the SL-RSRP or the SD-RSRP satisfying the threshold condition, in which the relay UE with the SL-RSRP or the SD-RSRP satisfying the threshold condition includes the relay UE with the SL-RSRP or the SD-RSRP between the relay UE and the second UE satisfying the second threshold condition, the first UE may select the relay UE with the SL-RSRP or the SD-RSRP between the relay UE and the second UE satisfying the second threshold condition as a candidate relay UE. In an implementation, the network device may configure one predefined threshold, the first UE may select the relay UE with the SL-RSRP or the SD-RSRP between the relay UE and the second UE being greater than or equal to the predefined threshold as the candidate relay UE, or the first UE may select the relay UE with the SL-RSRP or the SD-RSRP between the relay UE and the second UE being greater than the predefined threshold by at least one hysteresis parameter value as the candidate relay UE. In another implementation, the network device may configure two predefined thresholds, such as the lowest threshold and the highest threshold. As an example of a possible implementation, the first UE may select the relay UE with the SL-RSRP or the SD-RSRP between the relay UE and the second UE being greater than or equal to the lowest threshold and less than or equal to the highest threshold as the candidate relay UE. As another example of a possible implementation, the first UE may select the relay UE with the SL-RSRP or the SD-RSRP between the relay UE and the second UE is greater than the lowest threshold by at least one hysteresis parameter value and less than the highest threshold by at least one hysteresis parameter value as the candidate relay UE.

In an embodiment of the present disclosure, for example, the first selection condition includes selecting the relay UE with the SL-RSRP or the SD-RSRP satisfying the threshold condition, in which the relay UE with the SL-RSRP or the SD-RSRP satisfying the threshold condition includes the relay UE with the SL-RSRP or the SD-RSRP between the relay UE and the first UE satisfying the first threshold condition and with the SL-RSRP or the SD-RSRP between the relay UE and the second UE satisfying the second threshold condition, the first UE may select the relay UE with the SL-RSRP or the SD-RSRP between the relay UE and the first UE satisfying the first threshold condition and with the SL-RSRP or the SD-RSRP between the relay UE and the second UE satisfying the second threshold condition as a candidate relay UE.

In an implementation, the network device may configure one predefined threshold, the first UE may select the relay UE with the SL-RSRP or the SD-RSRP between the relay UE and the first UE being greater than or equal to the predefined threshold and with the SL-RSRP or the SD-RSRP between the relay UE and the second UE being greater than or equal to the predefined threshold as a candidate relay UE, or the first UE may select the relay UE with the SL-RSRP or the SD-RSRP between the relay UE and the first UE being greater than the predefined threshold by at least one hysteresis parameter value and with the SL-RSRP or the SD-RSRP between the relay UE and the second UE being greater than the predefined threshold by at least one hysteresis parameter value as a candidate relay UE.

In another implementation, the network device may configure two predefined thresholds, such as the lowest threshold and the highest threshold. As an example of a possible implementation, the SL-RSRP or the SD-RSRP between the first UE and the relay UE satisfying the first threshold condition may be that the SL-RSRP or the SD-RSRP between the first UE and the relay UE is greater than or equal to the lowest threshold and less than or equal to the highest threshold; and the SL-RSRP or the SD-RSRP between the second UE and the relay UE satisfying the second threshold condition may be that the SL-RSRP or the SD-RSRP between the second UE and the relay UE is greater than or equal to the lowest threshold and less than or equal to the highest threshold. As another example of a possible implementation, the SL-RSRP or the SD-RSRP between the first UE and the relay UE satisfying the first threshold condition may be that the SL-RSRP or the SD-RSRP between the first UE and the relay UE is greater than the lowest threshold by at least one hysteresis parameter value and less than the highest threshold at least one hysteresis parameter value; and the SL-RSRP or the SD-RSRP between the second UE and the relay UE satisfying the second threshold condition may be that the SL-RSRP or the SD-RSRP between the second UE and the relay UE is greater than the lowest threshold by at least one hysteresis parameter value and less than the highest threshold by at least one hysteresis parameter value.

In step 102, a selected or reselected target relay UE is determined according to the candidate relay UEs.

In a possible implementation, the first UE may select one candidate relay UE from the candidate relay UEs as the selected or reselected target relay UE based an implementation. For example, the first UE may randomly select one candidate relay UE from the candidate relay UEs as the selected or reselected target relay UE based an implementation.

In another possible implementation, the first UE may select a plurality of candidate relay UEs from the candidate relay UE as the selected or reselected target relay UEs based an implementation.

Optionally, in some embodiments of the present disclosure, the first UE may be a source remote UE in the U2U relay scenario, and the second UE may be the target remote UE in a U2U relay scenario.

For example, the first UE may be the source remote UE in the U2U relay scenario, the second UE may be the target remote UE in the U2U relay scenario, the source remote UE may select a relay UE satisfying at least one of the following conditions 1) to 3) as the candidate relay UE:
1) a notification message or a neighboring cell list includes a UE identifier of the target remote UE;
2) an SL-RSRP/SD-RSRP between the source remote UE and the relay UE is greater than or equal to a predefined threshold or greater than a predefined threshold by at least one hysteresis parameter value; or
3) an SL-RSRP/SD-RSRP between the target remote UE and the relay UE is greater than or equal to a predefined threshold or greater than a predefined threshold by at least one hysteresis parameter value.

As an example, for mode A, the source remote UE needs to determine that the notification message/neighbor list broadcast by a relay UE includes the UE identifier of the target remote UE. A possible implementation of the UE identifier of the target remote UE is a source layer 2 address of the target remote UE. Another possible implementation is an application layer identifier, which does not limit other implementations. In addition, the SL-RSRP/SD-RSRP also needs to satisfy a preset condition, which may be the SL-RSRP/SD-RSRP between the source remote UE and the relay UE meets the preset condition, or the SL-RSRP/SD-RSRP between the target remote UE and the relay UE meets the preset condition, or the SL-RSRP/SD-RSRP between the source remote UE and the relay UE and the SL-RSRP/SD-RSRP between the target remote UE and the relay UE meet the preset condition at the same time. The SL-RSRP/SD-RSRP satisfying the preset condition may be that the SL-RSRP/SD-RSRP is greater than or equal to a predefined threshold or greater than a predefined threshold by at least one hysteresis parameter value. The hysteresis parameter value may be a threshold offset or a hysteresis.

In an implementation, the network device may configure two predefined thresholds, i.e., a lowest threshold and a highest threshold. As an example, the SL-RSRP/SD-RSRP between the source remote UE and the relay UE satisfying the preset condition may be that: the SL-RSRP/SD-RSRP between the source remote UE and the relay UE is greater than or equal to the lowest threshold and less than or equal to the highest threshold, or the SL-RSRP/SD-RSRP between the source remote UE and the relay UE is greater than the lowest threshold by at least one hysteresis parameter value and less than the highest threshold by at least one hysteresis parameter value.

As an example, the SL-RSRP/SD-RSRP between the target remote UE and the relay UE satisfying the preset condition may be that: the SL-RSRP/SD-RSRP between the target remote UE and the relay UE is greater than or equal to the lowest threshold and less than or equal to the highest threshold or the SL-RSRP/SD-RSRP between the target remote UE and the relay UE is greater than the lowest threshold by at least one hysteresis parameter value and less than the highest threshold by at least one hysteresis parameter value.

After determining the candidate relay UE, the source remote UE may determine the selected or reselected target relay UE according to the candidate relay UEs. In an example of a possible implementation, the source remote UE may randomly select one candidate relay UE from the candidate relay UEs as the selected or reselected target relay UE. As another example of the possible implementation, the source remote UE may select the plurality of candidate relay UEs from the candidate relay UE as the selected or reselected target relay UEs.

Optionally, in some embodiments of the present disclosure, the first UE may be a target remote UE in the U2U relay scenario, and the second UE may be a source remote UE in the U2U relay scenario.

For example, the first UE may be the target remote UE in the U2U relay scenario, and the second UE may be the source remote UE in the U2U relay scenario, the target remote UE may select the relay UE satisfying at least one of the following conditions 1) to 3) as the candidate relay UE:
1) a notification message or a neighboring cell list includes a UE identifier of the source remote UE;
2) an SL-RSRP/SD-RSRP between the source remote UE and the relay UE is greater than or equal to a predefined threshold or greater than a predefined threshold by at least one hysteresis parameter value; or
3) an SL-RSRP/SD-RSRP between the target remote UE and the relay UE is greater than or equal to a predefined threshold or greater than a predefined threshold by at least one hysteresis parameter value.

As an example, for mode A, the target remote UE needs to determine that the notification message broadcast by the relay UE includes the UE identifier of the source remote UE. A possible implementation of the UE identifier of the source remote UE is a source layer 2 address of the source remote UE, and another possible implementation is an application layer identifier, which does not limit other implementations. In addition, the SL-RSRP/SD-RSRP also needs to satisfy a preset condition, which may be that the SL-RSRP/SD-RSRP between the source remote UE and the relay UE meets the preset condition, the SL-RSRP/SD-RSRP between the target remote UE and the relay UE meets the preset condition, or the SL-RSRP/SD-RSRP between the source remote UE and the relay UE and the SL-RSRP/SD-RSRP between the target remote UE and the relay UE meet the preset condition at the same time. The SL-RSRP/SD-RSRP satisfying the preset condition may be that the SL-RSRP/SD-RSRP is greater than or equal to a predefined threshold or greater than a predefined threshold by at least one hysteresis parameter value. The hysteresis parameter value may be a threshold offset or a hysteresis.

In an implementation, the network device may configure two predefined thresholds, i.e., a lowest threshold and a highest threshold. As an example, the SL-RSRP/SD-RSRP between the source remote UE and the relay UE satisfying the preset condition may be that: the SL-RSRP/SD-RSRP between the source remote UE and the relay UE is greater than or equal to the lowest threshold and less than or equal to the highest threshold, or the SL-RSRP/SD-RSRP between the source remote UE and the relay UE is greater than the lowest threshold by at least one hysteresis parameter value and less than the highest threshold by at least one hysteresis parameter value.

As an example, the SL-RSRP/SD-RSRP between the target remote UE and the relay UE satisfying the preset condition may be that: the SL-RSRP/SD-RSRP between the target remote UE and the relay UE is greater than or equal to the lowest threshold and less than or equal to the highest threshold or the SL-RSRP/SD-RSRP between the target remote UE and the relay UE is greater than the lowest threshold by at least one hysteresis parameter value and less than the highest threshold by at least one hysteresis parameter value.

After determining the candidate relay UE, the target remote UE may determine the selected or reselected target relay UE according to the candidate relay UEs. In an example of a possible implementation, the target remote UE may randomly select one candidate relay UE from the candidate relay UEs as the selected or reselected target relay UE. As another example of a possible implementation, the target remote UE may select the plurality of candidate relay UEs from the candidate relay UE as the selected or reselected target relay UEs.

By implementing the embodiments of the present disclosure, the first UE can select or reselect the target relay UE according to the relay selection condition, which may solve the problem of how to select and reselect the relay UE in the U2U scenario, thereby ensuring normal communication of the UE.

It should be noted that, for the U2U scenario, there are two modes for transmitting a discovery request message, which are mode A and mode B, respectively. For mode B, if there are a plurality of U2U relay UEs, the source remote UE or the target remote UE selects one or more U2U relay UEs as relay UEs. The implementation of the relay UE selection and reselection by the first UE in the case of mode B will be described below with reference to the embodiments. Referring to FIG. 2, FIG. 2 is a flowchart of another method for relay UE selection and reselection for a UE-to-UE scenario according to an embodiment of the present disclosure. It should be noted that the method may be performed by a first UE. In an implementation, the first UE in this embodiment may be a source remote UE in the U2U scenario, and the second UE in this embodiment may be a target remote UE in the U2U scenario. As shown in FIG. 2, the method may include but is not limited to the following steps.

In step 201, candidate relay UEs are determined according to a second selection condition.

In an embodiment of the present disclosure, the second selection condition may include any one of the following items 1) to 2):
1) selecting a relay UE with an SL-RSRP or an SD-RSRP between the first UE and the relay UE satisfying a first threshold condition as a candidate relay UE; or
2) selecting a relay UE with an SL-RSRP or an SD-RSRP between the first UE and the relay UE satisfying a first threshold condition and with an SL-RSRP or an SD-RSRP between the second UE and the relay UE satisfying a second threshold condition as a candidate relay UE.

Optionally, in an embodiment of the present disclosure, for example, the second selection condition includes selecting the relay UE with the SL-RSRP or the SD-RSRP between the first UE and the relay UE satisfying the first threshold as the candidate relay UE, in which the first UE may be the source remote UE in the U2U scenario, and the second UE is the target remote UE in the U2U scenario, the source remote UE may select the relay UE with the SL-RSRP or the SD-RSRP between the source remote UE and the relay UE satisfying the first threshold condition as the candidate relay UE.

In a possible implementation, the first UE sends a discovery request message to the second UE through at least one first relay UE ; the first UE receives a discovery response message sent by the second UE through at least one second relay UE, in which the at least one second relay UE is selected by the second UE from the at least one first relay UE and is a relay UE with an SL-RSRP or an SD-RSRP between the relay UE and the second UE satisfying the second threshold condition; and the first UE selects, from the at least one second relay UE, all second relay UEs with an SL-RSRP or an SD-RSRP between the second relay UE and the first UE satisfying the first threshold condition as the candidate relay UEs. An implementation that the SL-RSRP or the SD-RSRP between the second UE and the relay UE satisfying the second threshold condition, and an implementation manner that the SL-RSRP or the SD-RSRP between the first UE and the relay UE satisfying the first threshold condition may be implemented by using any one of the embodiments of the present disclosure, which is not limited herein, and details are not described herein again.

For example, for mode B, the source remote UE sends the discovery request message to the second UE through the at least one first relay UE. The target remote UE receives the discovery request message forwarded by the at least one first relay UE. The target remote UE may select, from the at least one first relay UE, the relay UE with the SL-RSRP or the SD-RSRP between the relay UE and the target remote UE being greater than or equal to the predefined threshold as the second relay UE, or the target remote UE may select, from the at least one first relay UE, the relay UE with the SL-RSRP or the SD-RSRP between the relay UE and the target remote UE being greater than the predefined threshold by at least one hysteresis parameter value as the second relay UE. The target remote UE forwards the discovery response message through the second relay UE. The source remote UE receives the discovery response message sent by the target remote UE through the at least one second relay UE. The source remote UE selects, from the at least one second relay UE, all second relay UEs with the SL-RSRP or the SD-RSRP between the second relay UE and the source remote UE being greater than or equal to the predefined threshold as the candidate relay UEs, or the source remote UE selects, from the at least one second relay UE, all second relay UEs with the SL-RSRP or the SD-RSRP between the second relay UE and the source remote UE being greater than the predefined threshold by at least one hysteresis parameter value as the candidate relay UEs.

Optionally, in an embodiment of the present disclosure, for example, the second selection condition includes selecting the relay UE with the SL-RSRP or the SD-RSRP between the first UE and the relay UE satisfying the first threshold condition and with the SL-RSRP or the SD-RSRP between the second UE and the relay UE satisfying the second threshold condition as a candidate relay UE, in which the first UE may be the source remote UE in the U2U scene, and the second UE may be the target remote UE in the U2U scene, the source remote UE selects the relay UE with the SL-RSRP or the SD-RSRP between the source remote UE and the relay UE satisfying the first threshold condition and with the SL-RSRP or the SD-RSRP between the target remote UE and the relay UE satisfying the second threshold condition as the candidate relay UE.

In a possible implementation, the first UE acquires the SL-RSRP or the SD-RSRP between the second UE and the relay UE; and selects all relay UEs with the SL-RSRP or the SD-RSRP between the relay UE and the first UE satisfying the first threshold condition and the SL-RSRP or the SD-RSRP between the relay UE and the second UE satisfying the second threshold condition as the candidate relay UEs.

As an example of a possible implementation, the first UE may select, based on an implementation, all relay UEs with the SL-RSRP or the SD-RSRP between the relay UE and the first UE satisfying the first threshold condition as a first candidate relay UE set; and select, from the first candidate relay UE set, all relay UEs with the SL-RSRP or the SD-RSRP between the relay UE and the second UE satisfying the second threshold condition as the candidate relay UEs. In another possible implementation, the first UE may select, based on an implementation, all relay UEs with the SL-RSRP or the SD-RSRP between the relay UE and the second UE satisfying the second threshold condition as a candidate relay UE set, and select, from the first candidate relay UE set, all relay UEs with the SL-RSRP or the SD-RSRP between the relay UE and the first UE satisfying the first threshold condition as the candidate relay UEs.

Optionally, the first UE may acquire the SL-RSRP or the SD-RSRP between the second UE and the relay UE by using a discovery signal of the relay UE or in any other manner. An implementation manner that the SL-RSRP or the SD-RSRP between the second UE and the relay UE satisfies the second threshold condition, and an implementation manner that the SL-RSRP or the SD-RSRP between the first UE and the relay UE satisfies the first threshold condition may be implemented by using any one of the embodiments of the present disclosure, which is not limited herein, and details are not described herein again.

For example, for mode B, the source remote UE may acquire the SL-RSRP or SD-RSRP between the target remote UE and the relay UE by using the discovery signal of the relay UE or in any other manner. The source remote UE selects all relay UEs with the SL-RSRP or the SD-RSRP between the relay UE and the source remote UE satisfying the first threshold condition and with the SL-RSRP or the SD-RSRP between the relay UE and the target remote UE satisfying the second threshold condition as the candidate relay UEs.

In step 202, the selected or reselected target relay UE is determined according to the candidate relay UEs.

In a possible implementation, the first UE may select one candidate relay UE from the candidate relay UEs as the target relay UE. In another possible implementation, the first UE may select a plurality of relay UEs from the candidate relay UE as the target relay UEs. Optionally, the first UE sends a discovery request message to the second UE through the target relay UE.

By implementing the embodiments of the present disclosure, the target remote UE can select the relay UEs satisfying the condition to forward the discovery response message, and the source remote UE can select the relay UEs satisfying the condition from the relay UEs forwarding the discovery response message as the candidate relay UE, so as to implement the selection or reselection of the target relay UE by the source remote UE, which can solve the problem of how to select and reselect the relay UE in the U2U scenario, thereby ensuring normal communication of the UE.

It may be understood that the embodiment shown in FIG. 2 is an implementation of the method for relay UE selection and reselection for a UE-to-UE scenario according to an embodiment of the present disclosure from a first UE side. The embodiments of the present disclosure further provide a method for relay UE selection and reselection for a UE-to-UE scenario, and the following describes, from a second UE side, an implementation of a method for relay UE selection and reselection for a UE-to-UE scenario. FIG. 3 is a flowchart of another method for relay UE selection and reselection for UE-to-UE scenario according to an embodiment of the present disclosure. It should be noted that the method can be performed by the second UE. In this embodiment, the first UE is a source remote UE in the UE-to-UE scenario, and the second UE is a target remote UE in the UE-to-UE scenario. As shown in FIG. 3, the method may include but is not limited to the following steps.

In step 301, a discovery request message sent by a first UE through at least one first relay UE is received.

In an implementation, for the mode B, the target remote UE receives the discovery request message forwarded by the at least one first relay UE.

In step 302, a relay UE with an SL-RSRP or an SD-RSRP between the relay UE and the second UE satisfying a second threshold condition is selected from the at least one first relay UE as the second relay UE.

In the embodiments of the present disclosure, an implementation that the SL-RSRP or the SD-RSRP between the second UE and the relay UE satisfies the second threshold condition may be implemented in any one of the embodiments of the present disclosure, which is not limited herein, and will not be repeated here.

In step 303, a discovery response message is sent to the first UE through the second relay UE, the second relay UE being used by the first UE for relay UE selection and reselection.

In an implementation, the target remote UE sends the response message to the source remote UE through the second relay UEs. The source remote UE receives the discovery response message forwarded by the second relay UEs, the source remote UE selects, from the second relay UEs, a relay UE with the SL-RSRP or the SD-RSRP between the relay UE and the source remote UE satisfying the first threshold condition as the candidate relay UE, and the source remote UE determines, based on an implementation of the UE, one or more relay UEs in the candidate relay UE as the selected or reselected target relay UE. An implementation manner that the SL-RSRP or the SD-RSRP between the source remote UE (that is, the first UE) and the relay UE satisfies the first threshold condition may be implemented in any one of the embodiments of the present disclosure, which is not limited herein, and details are not described herein again.

By implementing the embodiments of the present disclosure, the target remote UE can select or reselect, according to the relay selection condition of the target remote UE, the relay UE to forward the discovery response message, and then on the basis of the relay UE selected or reselected by the target remote UE, the source remote UE can selects the relay UE satisfying the relay selection condition of the source remote UE as the candidate relay UE, thereby solving the problem of how to select and reselect the relay UE in the U2U scenario, thereby ensuring normal communication of the UE.

It should be noted that, for mode B, if there are a plurality of U2U relay UEs, the source remote UE or the target remote UE selects one U2U relay UE as the relay UE. An implementation of the relay UE selection and reselection by the second UE in the case of mode B will be described below with reference to the embodiments. FIG. 4 is a flowchart of another method for relay UE selection and reselection for a UE-to-UE scenario according to an embodiment of the present disclosure. It should be noted that the method can be performed by the second UE. In an implementation, the first UE in this embodiment may be a source remote UE in the U2U scenario, and the second UE in this embodiment may be a target remote UE in the U2U scenario. As shown in FIG. 4, the method may include but is not limited to the following steps.

In step 401, candidate relay UEs are determined according to a third selection condition.

The third selection condition includes any one of the following items 1) to 2):
1) selecting a relay UE with an SL-RSRP or an SD-RSRP between the second UE and the relay UE satisfying a second threshold condition as a candidate relay UE; or
2) selecting a relay UE with an SL-RSRP or an SD-RSRP between a first UE and the relay UE satisfying a first threshold condition and with an SL-RSRP or an SD-RSRP between the second UE and the relay UE satisfying a second threshold condition as a candidate relay UE.

Optionally, in an embodiment of the present disclosure, for example, the third selection condition includes selecting the relay UE with the SL-RSRP or the SD-RSRP between the second UE and the relay UE satisfying the second threshold as the candidate relay UE, the first UE may be the source remote UE in the U2U scenario, the second UE may be the target remote UE in the U2U scenario, and the target remote UE may select the relay UE with the SL-RSRP or the SD-RSRP between the relay UE and the target remote UE satisfying the second threshold condition as the candidate relay UE.

In a possible implementation, the second UE receives a discovery request message sent by the first UE through at least one third relay UE, where the at least one third relay UE is selected by the first UE and is a relay UE with an SL-RSRP or an SD-RSRP between the relay UE and the first UE satisfying the first threshold condition; and the second UE selects, from the at least one third relay UE, all third relay UEs with an SL-RSRP or an SD-RSRP between the third relay UE and the second UE satisfying the second threshold condition as the candidate relay UEs. An implementation manner that the SL-RSRP or the SD-RSRP between the second UE and the relay UE satisfying the second threshold condition, and an implementation manner that the SL-RSRP or the SD-RSRP between the first UE and the relay UE satisfying the first threshold condition may be implemented by using any one of the embodiments of the present disclosure, which is not limited herein, and details are not described here again.

For example, for mode B, the source remote UE selects the relay UE with the SL-RSRP or the SD-RSRP satisfying the first threshold condition between the relay UE and the source remote UE as the third relay UE, and the source remote UE sends the discovery request message to the target remote UE through the third relay UE. The target remote UE receives the discovery request message forwarded by the third relay UE, and the target remote UE selects, from the third relay UE, all third relay UEs with the SL-RSRP or the SD-RSRP between the relay UE and the target remote UE satisfying the second threshold condition as the candidate relay UE]

Optionally, in an embodiment of the present disclosure, for example, the third selection condition includes selecting the relay UE with the SL-RSRP or the SD-RSRP between the first UE and the relay UE satisfying the first threshold condition and with the SL-RSRP or the SD-RSRP between the second UE and the relay UE satisfying the second threshold condition as the candidate relay UE, where the first UE may be the source remote UE in the U2U scenario, and the second UE may be the target remote UE in the U2U scenario, the target remote UE selects the relay UE with the SL-RSRP or the SD-RSRP between the relay UE and the target remote UE satisfying the second threshold condition and with the SL-RSRP or the SD-RSRP between the relay UE and the source remote UE satisfying the first threshold condition as the candidate relay UE.

In a possible implementation, the second UE acquires the SL-RSRP or the SD-RSRP between the first UE and the relay UE. The second UE may select all relay UEs with the SL-RSRP or the SD-RSRP between the relay UE and the second UE satisfying the second threshold condition and with the SL-RSRP or the SD-RSRP between the relay UE and the first UE satisfying the first threshold condition as the candidate relay UEs.

In an example of a possible implementation, the second UE may select, based on the implementation, all relay UEs with the SL-RSRP or the SD-RSRP between the relay UE and the second UE satisfying the second threshold condition as a second candidate relay UE set. The second UE selects, from the second candidate relay UE set, all relay UEs with the SL-RSRP or the SD-RSRP between the relay UE and the first UE satisfying the first threshold as the candidate relay UEs. In another example of a possible implementation, the second UE may select, based on the implementation, all relay UEs with the SL-RSRP or the SD-RSRP between the relay UE and the first UE satisfying the first threshold as a candidate relay UE set, and may select, from the candidate relay UE set, all relay UEs with the SL-RSRP or the SD-RSRP between the relay UE and the second UE satisfying the second threshold condition as the candidate relay UEs.

Optionally, the second UE may acquire the SL-RSRP or SD-RSRP between the first UE and the relay UE by using a discovery signal of the relay UE or in another manner. An implementation manner that the SL-RSRP or the SD-RSRP between the second UE and the relay UE satisfying the second threshold condition, and an implementation manner that the SL-RSRP or the SD-RSRP between the first UE and the relay UE satisfying the first threshold condition may be implemented by using any one of the embodiments of the present disclosure, which is not limited herein, and details are not described here again.

For example, for mode B, the target remote UE may acquire the SL-RSRP or the SD-RSRP between the source remote UE and the relay UE by using the discovery signal of the relay UE or in another manner. The target remote UE selects all relay UEs with the SL-RSRP or the SD-RSRP between the relay UE and the target remote UE satisfying the second threshold condition and with the SL-RSRP or the SD-RSRP between the relay UE and the source remote UE satisfying the first threshold condition as the candidate relay UEs.

In step 402, the selected or reselected target relay UE is determined according to the candidate relay UEs.

In a possible implementation, the second UE may select one candidate relay UE from the candidate relay UEs as the target relay UE based on an implementation. In another possible implementation, the second UE may select a plurality of relay UEs from the candidate relay UE as the target relay UEs based on an implementation. Optionally, the second UE sends a discovery response message to the first UE through the target relay UE.

By implementing the embodiments of the present disclosure, the source remote UE can select the relay UE satisfying the condition to forward the discovery request message, and the target remote UE selects the relay UE satisfying the condition from the relay UE forwarding the discovery request message as the candidate relay UE, so as to implement the selection or the reselection of the target relay UE by the target remote UE, which can solve the problem of how to select and reselect the relay UE in the U2U scenario, thereby ensuring normal communication of the UE.

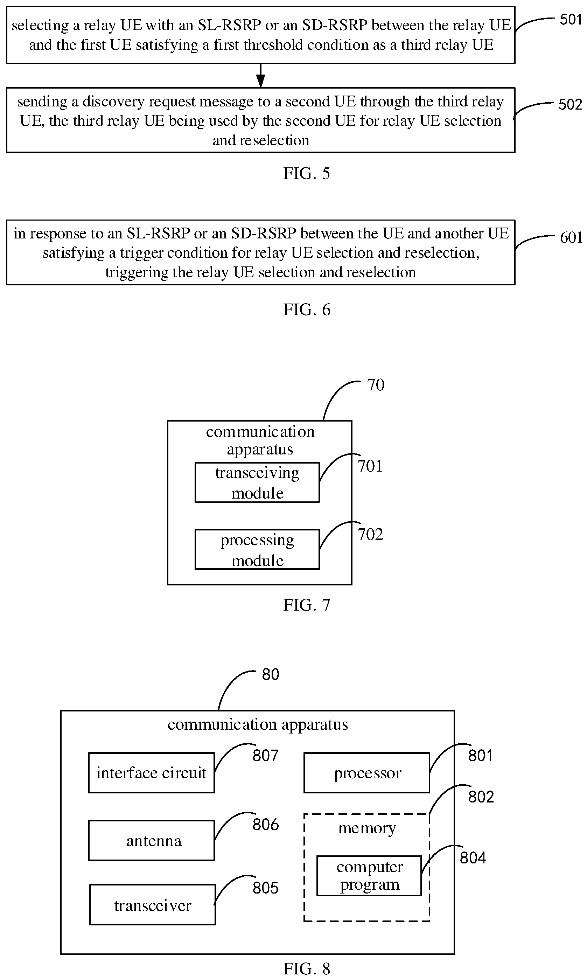

It may be understood that the embodiment shown in FIG. 4 is an implementation of the method for relay UE selection and reselection for a UE to a UE scenario according to an embodiment of the present disclosure from a second UE side. The embodiments of the present disclosure further provide a method for relay UE selection and reselection for a UE-to-UE scenario, and the following describes, from a first UE side, an implementation of a method for relay UE selection and reselection for a UE-to-UE scenario. Referring to FIG. 5, FIG. 5 is a flowchart of yet another method for relay UE selection and reselection for a UE-to-UE scenario according to an embodiment of the present disclosure. It should be noted that the method can be performed by the first UE. In this embodiment, the first UE is a source remote UE in the UE-to-UE scenario, and a second UE is a target remote UE in the UE-to-UE scenario. As shown in FIG. 5, the method may include but is not limited to the following steps.

In step 501, a relay UE with an SL-RSRP or an SD-RSRP between the relay UE and the first UE satisfying a first threshold condition is selected as a third relay UE.

An implementation manner that the SL-RSRP or the SD-RSRP between the first UE and the relay UE satisfies the first threshold condition may be implemented by using any one of the embodiments of the present disclosure, which is not limited herein, and details are not described here again.

In an implementation, the source remote UE selects the relay UE with the SL-RSRP or the SD-RSRP between the relay UE and the source remote UE as the third relay UE.

In step 502, a discovery request message is sent to a second UE through the third relay UE, and the third relay UE being used by the second UE for relay UE selection and reselection.

In an implementation, the source remote UE sends a discovery request message to the target remote UE through the third relay UE. The target remote UE receives the discovery request message forwarded by the third relay UE, the target remote UE selects the relay UEs with the SL-RSRP or the SD-RSRP between the relay UE and the target remote UE satisfying the second threshold condition as the candidate relay UEs, and the target remote UE selects one or more relay UEs from the candidate relay UEs as the selected or reselected target relay UE.

By implementing the embodiments of the present disclosure, the source remote UE selects or reselects, according to the relay selection condition of the source remote UE, the relay UE to forward the discovery request message, and then on the basis of the relay UE selected or reselected by the source remote UE, the target remote UE selects the relay UE satisfying the relay selection condition of the target remote UE as the candidate relay UE, thereby solving the problem of how to select and reselect the relay UE in the U2U scenario, thereby ensuring normal communication of the UE.

The embodiments of the present disclosure further provide a method for triggering relay UE selection and reselection in a UE-to-UE scenario. Referring to FIG. 6, FIG. 6 is a flowchart of a method for triggering relay UE selection and reselection in a UE-to-UE scenario according to an embodiment of the present disclosure. It should be noted that the method can be performed by a UE. As shown in FIG. 6, the method may include but is not limited to the following steps.

In step 601, in response to an SL-RSRP or an SD-RSRP between the UE and another UE satisfying a trigger condition for relay UE selection and reselection, the UE triggers the relay UE selection and reselection.

In an implementation, the SL-RSRP or the SD-RSRP satisfying the trigger condition for relay UE selection and reselection includes: the SL-RSRP or the SD-RSRP is less than or equal to a predefined threshold; or the SL-RSRP or the SD-RSRP is less than a predefined threshold by at least one hysteresis parameter value. Optionally, the UE may determine the SL-RSRP or the SD-RSRP between the UE and another UE, and compare the SL-RSRP or the SD-RSRP with the predefined threshold to determine whether the SL-RSRP or the SD-RSRP between the UE and the other UE satisfies the trigger condition for relay UE selection and reselection.

In an implementation, if the SL-RSRP and the SD-RSRP between the UE and the other UE may be acquired, the acquired SL-RSRP may be compared with the predefined threshold, or the acquired SD-RSRP may be compared with the predefined threshold, or the UE may select one of the SL-RSRP/SD-RSRP to be compared with the predefined threshold. If the UE cannot acquire the SL-RSRP between the UE and the other UE, the UE may only acquire the SD-RSRP between the UEs, and the UE compares the acquired SD-RSRP with the predefined threshold. If the UE cannot acquire the SD-RSRP between the UE and the other UE, only the SL-RSRP between the UE and the other UE may be acquired, the UE compares the acquired SL-RSRP with the predefined threshold.

It should be noted that, in the embodiments of the present disclosure, the predefined threshold may be configured or preconfigured by the network device for the UE. If the UE is in in-coverage, the UE may acquire the predefined threshold configured by the network device by using a dedicated RRC signaling or an SIB. If the UE is out-of-coverage, the UE may acquire the predefined threshold through pre-configuration.

In a possible implementation, the UE may be a source remote UE in the UE-to-UE scenario, and another UE may be a target remote UE in a UE-to-UE scenario.

As an example of a possible implementation, the source remote UE determines the SL-RSRP or the SD-RSRP between the source remote UE and the target remote UE, and compares the SL-RSRP or the SD-RSRP with the predefined threshold to determine whether the SL-RSRP or the SD-RSRP between the source remote UE and the target remote UE satisfies the trigger condition for relay UE selection and reselection. For example, the SL-RSRP or the SD-RSRP between the source remote UE and the target remote UE is less than or equal to the predefined threshold, or the SL-RSRP or the SD-RSRP is less than the predefined threshold by at least one hysteresis parameter value, the source remote UE triggers the relay UE selection. The implementation manner of selecting the relay UE by the source remote UE may be implemented in any one of the embodiments of the present disclosure, which is not limited herein, and details are not described here again.

In another possible implementation, the terminal device is the target remote UE in the UE-to-UE scenario, and the other terminal devices is the source remote UEs in the UE-to-UE scenario.

As an example of a possible implementation, the target remote UE determines the SL-RSRP or the SD-RSRP between the source remote UE and the target remote UE, and compares the SL-RSRP or the SD-RSRP with a predefined threshold to determine whether the SL-RSRP or the SD-RSRP between the target remote UE and the source remote UE satisfies the trigger condition for relay UE selection and reselection. For example, the SL-RSRP or the SD-RSRP between the source remote UE and the target remote UE is less than or equal to the predefined threshold, or the SL-RSRP or SD-RSRP is less than the predefined threshold by at least one hysteresis parameter value, the target remote UE triggers the relay UE selection. The implementation manner of selecting the relay UE by the target remote UE may be implemented in any one of the embodiments of the present disclosure, which is not limited herein, and details are not described here again.

In yet another possible implementation, the UE is the source remote UE in the UE to the UE scenario, and the other UE is a relay UE in the UE-to-UE scenario.

As an example of a possible implementation, the source remote UE determines the SL-RSRP or the SD-RSRP between the source remote UE and the relay UE, and compares the SL-RSRP or SD-RSRP with a predefined threshold to determine whether the SL-RSRP or the SD-RSRP between the source remote UE and the relay UE satisfies the trigger condition for relay UE selection and reselection. For example, the SL-RSRP or the SD-RSRP between the source remote UE and the relay UE is less than or equal to the predefined threshold, or the SL-RSRP or the SD-RSRP is less than the predefined threshold by at least one hysteresis parameter value, the source remote UE triggers the relay UE reselection. An implementation of performing reselection by the source remote UE on the relay UE may be implemented by using any one of the embodiments of the present disclosure, which is not limited herein, and details are not described here again.

In yet another possible implementation, the UE is the target remote UE in the UE-to-UE scenario, and the other UE is the relay UE in the UE-to-UE scenario.

In an example of a possible implementation, the target remote UE determines the SL-RSRP or the SD-RSRP between the target remote UE and the relay UE, and compares the SL-RSRP or the SD-RSRP with the predefined threshold to determine whether the SL-RSRP or the SD-RSRP between the target remote UE and the relay UE satisfies the trigger condition for relay UE selection and reselection. For example, the SL-RSRP or the SD-RSRP between the target remote UE and the relay UE is less than or equal to the predefined threshold, or the SL-RSRP or the SD-RSRP is less than the predefined threshold by at least one hysteresis parameter value, the target remote UE triggers the relay UE reselection. The implementation of performing reselection by the target remote UE on the relay UE may be implemented by using any one of the embodiments of the present disclosure, which is not limited herein, and details are not described here again.

By implementing the embodiments of the present disclosure, when the terminal device determines that the SL-RSRP or the SD-RSRP between the UE and the other UE satisfies a trigger condition of the relay UE selection and reselection, the relay UE selection or reselection is triggered, so that the problem of selecting and reselecting the relay UE in the U2U scenario can be solved, thereby ensuring normal communication of the UE.

In the embodiments provided in the foregoing embodiments of the present disclosure, the methods provided in the embodiments of the present disclosure are separately described from the perspective of the UEs (such as the foregoing first UE and the second UE). To implement the functions in the method provided in the foregoing embodiments of the present disclosure, the UEs (for example, the first UE and the second UE) may include a hardware structure and a software module, to implement the foregoing functions in a form of a hardware structure, a software module, or a hardware structure plus software module. A function in the foregoing functions may be performed by using a hardware structure, a software module, or a hardware structure plus a software module.

FIG. 7 is a schematic structural diagram of a communication apparatus 70 according to an embodiment of the present disclosure. The communication apparatus 70 shown in FIG. 7 may include a transceiving module 701 and a processing module 702, the transceiving module 701 may include a transmitting module and/or a receiving module, the transmitting module is configured to implement a transmitting function, and the receiving module is configured to implement a receiving function, and the transceiving module 701 may implement the transmitting function and/or the receiving function.

The communication apparatus 70 may be a UE (for example, the first UE and the second UE in the foregoing method embodiments), or may be an apparatus in the UE, or may be an apparatus that can be matched and used with the UE.

The communication apparatus 70 is a UE (for example, the first UE in the foregoing embodiment shown in FIG. 1): the processing module 702 is configured to determine candidate relay UEs according to a first selection condition; and the processing module 702 is also configured to determine a selected or reselected target relay UE according to the candidate relay UEs. The first selection condition includes one of: selecting a relay UE including a UE identifier of a second UE in a notification message or a neighboring cell list as a candidate relay UE; selecting a relay UE with an SL-RSRP or an SD-RSRP satisfying a threshold condition as a candidate relay UE; or selecting a relay UE including a UE identifier of a second UE in a notification message or a neighboring cell list and with an SL-RSRP or an SD-RSRP satisfying a threshold condition as a candidate relay UE. The second UE is a target communication UE for the first UE, and the first UE communicates with the second UE through the relay UE.

In an implementation, the relay UE with the SL-RSRP or the SD-RSRP satisfying the threshold condition includes any one of: a relay UE with an SL-RSRP or an SD-RSRP between the relay UE and the first UE satisfying a first threshold condition; a relay UE with an SL-RSRP or an SD-RSRP between the relay UE and the second UE satisfying a second threshold condition; or a relay UE with an SL-RSRP or an SD-RSRP between the relay UE and the first UE satisfying a first threshold condition and with an SL-RSRP or an SD-RSRP between the relay UE and the second UE satisfying a second threshold condition.

In an implementation, the SL-RSRP or the SD-RSRP satisfying the threshold condition includes: the SL-RSRP or the SD-RSRP being greater than or equal to a predefined threshold; or the SL-RSRP or the SD-RSRP being greater than a predefined threshold by at least one hysteresis parameter value.

In a possible implementation, the predefined threshold includes a first predefined threshold and a second predefined threshold, in which the first predefined threshold is a lowest threshold, and the second predefined threshold is a highest threshold; and in which the SL-RSRP or the SD-RSRP being greater than or equal to the predefined threshold includes: the SL-RSRP or the SD-RSRP being greater than or equal to the first predefined threshold and less than or equal to the second predefined threshold. The SL-RSRP or the SD-RSRP being greater than the predefined threshold by at least one hysteresis parameter value includes: the SL-RSRP or the SD-RSRP being greater than the first predefined threshold by at least one hysteresis parameter value and less than the second predefined threshold by at least one hysteresis parameter value.

In a possible implementation, the processing module 702 is specifically configured to: select a candidate relay UE from the candidate relay UEs as the target relay UE based on an implementation; or select a plurality of relay UEs from the candidate relay UEs as the target relay UEs based on an implementation.

The communication apparatus 70 is a UE (for example, the first UE in the foregoing embodiment shown in FIG. 2): the processing module 702 is configured to determine candidate relay UEs according to a second selection condition; and the processing module 702 is further configured to determine a selected or reselected target relay UE according to the candidate relay UEs. The second selection condition includes any one of: selecting a relay UE with an SL-RSRP or an SD-RSRP between the first UE and the relay UE satisfying a first threshold condition as a candidate relay UE; or selecting a relay UE with an SL-RSRP or an SD-RSRP between the first UE and the relay UE satisfying a first threshold condition and with an SL-RSRP or an SD-RSRP between the second UE and the relay UE satisfying a second threshold condition as a candidate relay UE. The first UE is a source remote UE in the UE-to-UE scenario, and the second UE is a target remote UE in the UE-to-UE scenario.

In an implementation, the transceiving module 701 is configured to send a discovery request message to the second UE through at least one first relay UE. The transceiving module 701 is also configured to receive a discovery response message sent by at least one second relay UE, in which the at least one second relay UE is selected by the second UE from the at least one first relay UE and is a relay UE with an SL-RSRP or an SD-RSRP between the relay UE and the second UE satisfying the second threshold condition. The processing module 702 is configured to select, from the at least one second relay UE, all second relay UEs with an SL-RSRP or an SD-RSRP between the second relay UE and the first UE satisfying the first threshold condition as the candidate relay UEs.

In a possible implementation, the processing module 702 is configured to acquire the SL-RSRP or the SD-RSRP between the second UE and the relay UE. The processing module 702 is also configured to select all relay UEs with the SL-RSRP or the SD-RSRP between the relay UE and the first UE satisfying the first threshold condition and with the SL-RSRP or the SD-RSRP between the relay UE and the second UE satisfying the second threshold condition as the candidate relay UEs.

In a possible implementation, the processing module 702 is specifically configured to: select a candidate relay UE from the candidate relay UEs as the target relay UE based on an implementation; or select a plurality of relay UEs from the candidate relay UEs as the target relay UEs based on an implementation.

The communication apparatus 70 is a UE (for example, the second UE in the foregoing embodiment shown in FIG. 3): the transceiving module 701 is configured to receive a discovery request message sent by at least one first relay UE. The processing module 702 is configured to select, from the at least one first relay UE, a relay UE with an SL-RSRP or an SD-RSRP between the relay UE and the second UE satisfying a second threshold condition as a second relay UE. The transceiving module 701 is also configured to send a discovery response message to a first UE through the second relay UE, the second relay UE being used by the first UE for relay UE selection and reselection. The first UE is a source remote UE in the UE-to-UE scenario, and the second UE is a target remote UE in the UE-to-UE scenario.

The communication apparatus 70 is a UE (for example, the second UE in the foregoing embodiment shown in FIG. 4): The processing module 702 is configured to determine candidate relay UEs according to a third selection condition. The processing module 702 is also configured to determine a selected or reselected target relay UE according to the candidate relay UEs. The third selection condition includes any one of: selecting a relay UE with an SL-RSRP or an SD-RSRP between the second UE and the relay UE satisfying a second threshold condition as a candidate relay UE; or selecting a relay UE with an SL-RSRP or an SD-RSRP between a first UE and the relay UE satisfying a first threshold condition and with an SL-RSRP or an SD-RSRP between the second UE and the relay UE satisfying a second threshold condition as a candidate relay UE. The first UE is a source remote UE in the UE-to-UE scenario, and the second UE is a target remote UE in the UE-to-UE scenario.

In an implementation, the transceiving module 701 is configured to receive a discovery request message sent by at least one third relay UE, in which the at least one third relay UE is selected by the first UE and is a relay UE with an SL-RSRP or an SD-RSRP between the relay UE and the first UE satisfying the first threshold condition. The processing module 702 is configured to select, from the at least one third relay UE, all third relay UEs with an SL-RSRP or an SD-RSRP between the third relay UE and the second UE satisfying the second threshold condition as the candidate relay UEs.

In a possible implementation, the processing module 702 is further configured to acquire the SL-RSRP or the SD-RSRP between the first UE and the relay UE. The processing module 702 selects all the relay UEs with the SL-RSRP or the SD-RSRP between the relay UE and the second UE satisfying the second threshold condition as a second candidate relay UE set. The processing module 702 selects, from the second candidate relay UE set, all relay UEs with the SL-RSRP or the SD-RSRP between the relay UE and the first UE satisfying the first threshold condition as the candidate relay UEs.

In an implementation, the processing module 702 is specifically configured to: select a candidate relay UE from the candidate relay UEs as the target relay UE based on an implementation; or select a plurality of relay UEs from the candidate relay UEs as the target relay UEs based on an implementation.

The communication apparatus 70 is a UE (for example, the first UE in the foregoing embodiment shown in FIG. 5): the processing module 702 is configured to select a relay UE with an SL-RSRP or an SD-RSRP between the relay UE and the first UE satisfying a first threshold condition as a third relay UE. The transceiving module 701 is configured to send a discovery request message to a second UE through the third relay UE, the third relay UE being used by the second UE for relay UE selection and reselection. The first UE is a source remote UE in the UE-to-UE scenario, and the second UE is a target remote UE in the UE-to-UE scenario.

The communication apparatus 70 is a UE (for example, the UE in the embodiment shown in FIG. 6): the processing module 702 is configured to trigger relay UE selection and reselection in response to an SL-RSRP or an SD-RSRP between the UE and another UE satisfying a trigger condition for the relay UE selection and reselection.

In an implementation, the SL-RSRP or the SD-RSRP satisfying the trigger condition for the relay UE selection and reselection includes: the SL-RSRP or the SD-RSRP being less than or equal to a predefined threshold; or the SL-RSRP or the SD-RSRP being less than a predefined threshold by at least one hysteresis parameter value.

In an implementation, the UE is a source remote UE in the UE-to-UE scenario, and the other UE is a target remote UE in the UE-to-UE scenario; or the UE is a target remote UE in the UE-to-UE scenario, and the other UE is a source remote UE in the UE-to-UE scenario; or the UE is a source remote UE or a target remote UE in the UE-to-UE scenario, and the other UE is a relay UE in the UE-to-UE scenario.

With regard to the apparatuses in the above embodiments, the specific manner in which the modules perform operations has been described in detail in the embodiments related to the methods, which will not be elaborated here.

FIG. 8 is a schematic structural diagram of another communication apparatus 80 according to an embodiment of the present disclosure. The communication apparatus 80 may be a UE (for example, the first UE and the second UE in the foregoing method embodiments), or may be a chip, a chip system, a processor, or the like that supports the UE to implement the foregoing methods. The apparatus may be configured to implement the methods described in the foregoing method embodiments, for details, refer to the descriptions in the foregoing method embodiments.

The communication apparatus 80 may include one or more processors 801. The processor 801 may be a general-purpose processor or a dedicated processor, such as a baseband processor or a central processing unit. The baseband processor may be configured to process a communication protocol and communication data, and the central processing unit may be configured to control the communication apparatus (for example, a base station, a baseband chip, a terminal device, a terminal device chip, a DU, or a CU), execute a computer program, and process data of the computer program.

Optionally, the communication apparatus 80 may further include one or more memories 802, which may store a computer program 804, and the processor 801 executes the computer program 804, so that the communication apparatus 80 performs the methods described in the foregoing method embodiments. Optionally, the memory 802 may further store data. The communication apparatus 80 and the memory 802 may be separately disposed, or may be integrated together.

Optionally, the communication apparatus 80 may further include a transceiver 805, and an antenna 806. The transceiver 805 may be referred to as a transceiving unit, a transceiver, a transceiving circuit, or the like, and is configured to implement a transceiving function. The transceiver 805 may include a receiver and a transmitter, the receiver may be referred to as a receiving unit or a receiving circuit, and is configured to implement a receiving function; and the transmitter may be referred to as a transmitting unit or a sending circuit, and is configured to implement a sending function.

Optionally, the communication apparatus 80 may further include one or more interface circuits 807, and the interface circuit 807 is configured to receive a code instruction and transmit the code instruction to the processor 801. The processor 801 runs the code instruction to cause the communication apparatus 80 to perform the methods described in the foregoing method embodiments.

The communication apparatus 80 is a UE (for example, the first UE in the foregoing embodiment shown in FIG. 1): the processor 801 is configured to perform step 101 and step 102 in FIG. 1.

The communication apparatus 80 is a UE (for example, the first UE in the foregoing embodiment shown in FIG. 2): the processor 801 is configured to perform step 201 and step 202 in FIG. 2.

The communication apparatus 80 is a UE (for example, the second UE in the foregoing embodiment shown in FIG. 3): the transceiver 805 is configured to perform step 301 and step 303 in FIG. 3, and the processor 801 is configured to perform step 302 in FIG. 3.

The communication apparatus 80 is a UE (for example, the second UE in the foregoing embodiment shown in FIG. 4): the processor 801 is configured to perform step 401 and step 402 in FIG. 4.

The communication apparatus 80 is a UE (for example, the first UE in the foregoing embodiment shown in FIG. 5): the processor 801 is configured to perform step 501 in FIG. 5, and the transceiver 805 is configured to perform step 502 in FIG. 5.

The communication apparatus 80 is a UE (for example, the UE in the foregoing embodiment shown in FIG. 6): The processor 801 is configured to perform step 601 in FIG. 6.

In an implementation, the processor 801 may include a transceiver configured to implement a receiving and transmitting function. For example, the transceiver may be a transceiving circuit, an interface, or an interface circuit. The transceiving circuit, the interface, or the interface circuit configured to implement the receiving and transmitting function may be separate, or may be integrated together. The transceiving circuit, the interface, or the interface circuit may be configured to read/write code/data, or the transceiving circuit, the interface, or the interface circuit may be configured to transmit or send a signal.

In an implementation, the processor 801 may store a computer program, and the computer program runs on the processor 801, so that the communication apparatus 80 may perform the methods described in the foregoing method embodiments. The computer program may be cured in the processor 801, and in this case, the processor 801 may be implemented by hardware.

In an implementation, the communication apparatus 80 may include a circuit, and the circuit may implement a function of sending or receiving or communicating in the foregoing method embodiments. The processor and the transceiver described in the present disclosure may be implemented on an integrated circuit (IC), an analog IC, a radio frequency integrated circuit (RFIC), a mixed signal IC, an application specific integrated circuit (ASIC), a printed circuit board (PCB), an electronic device, and the like. The processor and the transceiver may also be fabricated using various IC process technologies, such as complementary metal oxide semiconductor (CMOS), n-metal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), and the like.

The communication apparatus in the foregoing embodiments may be a UE (for example, the first UE and the second UE in the foregoing method embodiments), but the scope of the UE described in the present disclosure is not limited thereto, and the structure of the communication apparatus may not be limited by FIG. 8. The communication device may be a standalone device or may be part of a larger device. For example, the communication apparatus may be:
(1) an independent integrated circuit IC, or a chip, or a chip system or subsystem;
(2) a set having one or more ICs, optionally, the IC set may also include a storage component for storing data and a computer program;
(3) an ASIC, such as a modem;
(4) modules that can be embedded in other devices;
(5) a receiver, a terminal device, a smart terminal, a cellular phone, a wireless device, a handset, a mobile unit, a vehicle-mounted device, a network device, a cloud device, an artificial intelligence device, etc.
(6) other, etc.

Those skilled in the art may further understand that various illustrative logical blocks and steps listed in the embodiments of the present disclosure may be implemented by electronic hardware, computer software, or a combination of the two. Whether such functionality is implemented by hardware or software depends upon the particular application and design requirements of the overall system. A person skilled in the art may use various methods to implement the functions for each particular application, but it should not be understood that the implementation goes beyond the protection scope of the embodiments of the present disclosure.

The present disclosure further provides a readable storage medium having stored thereon instructions that, when executed by a computer, implement the functions of any one of the above method embodiments.

The present disclosure further provides a computer program product, which, when executed by a computer, implements the functions of any one of the above method embodiments.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs. When the computer program is loaded and executed on a computer, the procedure or functions according to the embodiments of the present disclosure are all or partially generated. The computer may be a general-purpose computer, a dedicated computer, a computer network, or another programmable apparatus. The computer program may be stored in a computer-readable storage medium or transmitted from one computer-readable storage medium to another computer-readable storage medium, for example, the computer program may be transmitted from a website, a computer, a server, or a data center to another website, a computer, a server, or a data center in a wired (for example, a coaxial cable, an optical fiber, a digital subscriber line (DSL)), or a wireless (e.g. infrared, wireless, microwave, etc.) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disk (DVD)), a semiconductor medium (for example, a solid state disk (SSD)), or the like.

A person of ordinary skill in the art may understand that various numerical numbers, such as first and second, involved in the present disclosure are merely distinguished for ease of description, and are not intended to limit the scope of the embodiments of the present disclosure, and also represent a sequence.

In the present disclosure, "at least one of" may also be described as one or more, and "a plurality of" may be two, three, four, or more, which is not limited in the present disclosure. In the embodiments of the present disclosure, for a type of technical feature, technical features in the type of technical feature are distinguished by "first", "second", "third", "A", "B", "C" and "D", etc. and the technical features described by "first", "second", "third", "A", "B", "C" and "D" do not have a sequential order or a sequence of sizes.

The correspondence relationships shown in the tables in the present disclosure may be configured or predefined. The values of the information in the tables are merely examples, and may be configured as other values, which is not limited in the present disclosure. When configuring the correspondence relationships between the information and the parameters, it does not need to configure all the corresponding relationships shown in the tables. For example, in the tables in the present disclosure, the correspondence relationships shown in some rows may also not be configured. For another example, appropriate deformation adjustment may be performed based on the foregoing tables, for example, splitting, merging, and the like. The names of the parameters in the foregoing tables may also be other names that may be understood by the communication apparatus, and a value or a representation manner of the parameters may also be any other value or representation manner that can be understood by the communication apparatus. When the foregoing tables are implemented, other data structures may also be used, for example, an array, a queue, a container, a stack, a linear table, a pointer, a linked list, a tree, a graph, a structure, a class, a heap, a hash table, or the like may be used.

Predefined in the present disclosure may be understood as definition, pre-definition, storage, pre-storage, pre-negotiation, pre-configuration, curing, or pre-firing.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that such implementation goes beyond the scope of the present disclosure.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

The above are only specific implementations of the present disclosure, but the protection scope of the present disclosure is not limited thereto, and any changes or substitutions can be easily conceived of by those skilled in the art within the technical scope disclosed in the present disclosure, which should be covered within the protection scope of the present disclosure. Therefore, the protection scope of the present disclosure shall be subject to the protection scope of the claims.

## Claims

1. A method for relay user equipment (UE) selection and reselection for a UE-to-UE scenario, performed by a first UE, comprising:
determining candidate relay UEs according to a first selection condition; and
determining a selected or reselected target relay UE according to the candidate relay UEs;
wherein the first selection condition comprises one of:
selecting a relay UE comprising a UE identifier of a second UE in a notification message or a neighboring cell list as a candidate relay UE, wherein the second UE is a target communication UE for the first UE, and the first UE communicates with the second UE through the relay UE;
selecting a relay UE with sidelink reference signal received power (SL-RSRP) or sidelink discovery reference signal received power (SD-RSRP) satisfying a threshold condition as a candidate relay UE; or
selecting a relay UE comprising a UE identifier of a second UE in a notification message or a neighboring cell list and with an SL-RSRP or an SD-RSRP satisfying a threshold condition as a candidate relay UE.

2. The method according to claim 1, wherein the relay UE with the SL-RSRP or the SD-RSRP satisfying the threshold condition comprises one of:
a relay UE with an SL-RSRP or an SD-RSRP between the relay UE and the first UE satisfying a first threshold condition;
a relay UE with an SL-RSRP or an SD-RSRP between the relay UE and the second UE satisfying a second threshold condition; or
a relay UE with an SL-RSRP or an SD-RSRP between the relay UE and the first UE satisfying a first threshold condition and with an SL-RSRP or an SD-RSRP between the relay UE and the second UE satisfying a second threshold condition.

3. The method according to claim 1, wherein the SL-RSRP or the SD-RSRP satisfying the threshold condition comprises:
the SL-RSRP or the SD-RSRP being greater than or equal to a predefined threshold; or
the SL-RSRP or the SD-RSRP being greater than a predefined threshold by at least one hysteresis parameter value.

4. The method according to claim 3, wherein the predefined threshold comprises a first predefined threshold and a second predefined threshold, wherein the first predefined threshold is a lowest threshold, and the second predefined threshold is a highest threshold, and wherein
the SL-RSRP or the SD-RSRP being greater than or equal to the predefined threshold comprises:
the SL-RSRP or the SD-RSRP being greater than or equal to the first predefined threshold and less than or equal to the second predefined threshold;
the SL-RSRP or the SD-RSRP being greater than the predefined threshold by at least one hysteresis parameter value comprises:
the SL-RSRP or the SD-RSRP being greater than the first predefined threshold by at least one hysteresis parameter value and less than the second predefined threshold by at least one hysteresis parameter value.

5. The method according to claim 1, wherein determining the selected or reselected target relay UE according to the candidate relay UEs comprises:
selecting a candidate relay UE from the candidate relay UEs as the target relay UE based on an implementation; or
selecting a plurality of relay UEs from the candidate relay UEs as the target relay UEs based on an implementation.

6. A method for relay user equipment (UE) selection and reselection for a UE-to-UE scenario, performed by a first UE, comprising:
determining candidate relay UEs according to a second selection condition; and
determining a selected or reselected target relay UE according to the candidate relay UEs;
wherein the second selection condition comprises one of:
selecting a relay UE with sidelink reference signal received power (SL-RSRP) or sidelink discovery reference signal received power (SD-RSRP) between the first UE and the relay UE satisfying a first threshold condition as a candidate relay UE; or
selecting a relay UE with an SL-RSRP or an SD-RSRP between the first UE and the relay UE satisfying a first threshold condition and with an SL-RSRP or an SD-RSRP between the second UE and the relay UE satisfying a second threshold condition as a candidate relay UE;
wherein the first UE is a source remote UE in the UE-to-UE scenario, and the second UE is a target remote UE in the UE-to-UE scenario.

7. The method according to claim 6, wherein determining the candidate relay UEs according to the second selection condition comprises:
sending a discovery request message to the second UE through at least one first relay UE;
receiving a discovery response message sent by at least one second relay UE, wherein the at least one second relay UE is selected by the second UE from the at least one first relay UE and is a relay UE with an SL-RSRP or an SD-RSRP between the relay UE and the second UE satisfying the second threshold condition; and
selecting, from the at least one second relay UE, all second relay UEs with an SL-RSRP or an SD-RSRP between the second relay UE and the first UE satisfying the first threshold condition as the candidate relay UEs.

8. The method according to claim 6, wherein determining the candidate relay UEs according to the second selection condition comprises:
acquiring the SL-RSRP or the SD-RSRP between the second UE and the relay UE;
selecting all relay UEs with the SL-RSRP or the SD-RSRP between the relay UE and the first UE satisfying the first threshold condition and with the SL-RSRP or the SD-RSRP between the relay UE and the second UE satisfying the second threshold condition as the candidate relay UEs.

9. The method according to any one of claims 6 to 8, determining the selected or reselected target relay UE according to the candidate relay UEs comprises:
selecting a candidate relay UE from the candidate relay UEs as the target relay UE based on an implementation; or
selecting a plurality of relay UEs from the candidate relay UEs as the target relay UEs based on an implementation.

10. A method for relay user equipment (UE) selection and reselection for a UE-to-UE scenario, performed by a second UE, comprising:
receiving a discovery request message sent by at least one first relay UE;
selecting, from the at least one first relay UE, a relay UE with sidelink reference signal received power (SL-RSRP) or sidelink discovery reference signal received power (SD-RSRP) between the relay UE and the second UE satisfying a second threshold condition as a second relay UE; and
sending a discovery response message to a first UE through the second relay UE, the second relay UE being used by the first UE for relay UE selection and reselection;
wherein the first UE is a source remote UE in the UE-to-UE scenario, and the second UE is a target remote UE in the UE-to-UE scenario.

11. A method for relay user equipment (UE) selection and reselection for a UE-to-UE scenario, performed by a second UE, comprising:
determining candidate relay UEs according to a third selection condition; and
determining a selected or reselected target relay UE according to the candidate relay UEs;
wherein the third selection condition comprises one of:
selecting a relay UE with sidelink reference signal received power (SL-RSRP) or sidelink discovery reference signal received power (SD-RSRP) between the second UE and the relay UE satisfying a second threshold condition as a candidate relay UE; or
selecting a relay UE with an SL-RSRP or an SD-RSRP between a first UE and the relay UE satisfying a first threshold condition and with an SL-RSRP or an SD-RSRP between the second UE and the relay UE satisfying a second threshold condition as a candidate relay UE;
wherein the first UE is a source remote UE in the UE-to-UE scenario, and the second UE is a target remote UE in the UE-to-UE scenario.

12. The method according to claim 11, wherein determining the candidate relay UEs according to the third selection condition comprises:
receiving a discovery request message sent by at least one third relay UE, wherein the at least one third relay UE is selected by the first UE and is a relay UE with an SL-RSRP or an SD-RSRP between the relay UE and the first UE satisfying the first threshold condition; and
selecting, from the at least one third relay UE, all third relay UEs with an SL-RSRP or an SD-RSRP between the third relay UE and the second UE satisfying the second threshold condition as the candidate relay UEs.

13. The method according to claim 11, wherein determining the candidate relay UEs according to the third selection condition comprises:
acquiring the SL-RSRP or the SD-RSRP between the first UE and the relay UE;
selecting all relay UEs with the SL-RSRP or the SD-RSRP between the relay UE and the first UE satisfying the first threshold condition and with the SL-RSRP or the SD-RSRP between the relay UE and the second UE satisfying the second threshold condition as the candidate relay UEs.

14. The method according to any one of claims 11 to 13, wherein determining the selected or reselected target relay UE according to the candidate relay UEs comprises:
selecting a candidate relay UE from the candidate relay UEs as the target relay UE based on an implementation; or
selecting a plurality of relay UEs from the candidate relay UEs as the target relay UEs based on an implementation.

15. A method for relay user equipment (UE) selection and reselection for a UE-to-UE scenario, performed by a first UE, comprising:
selecting a relay UE with sidelink reference signal received power (SL-RSRP) or sidelink discovery reference signal received power (SD-RSRP) between the relay UE and the first UE satisfying a first threshold condition as a third relay UE; and
sending a discovery request message to a second UE through the third relay UE, the third relay UE being used by the second UE for relay UE selection and reselection;
wherein the first UE is a source remote UE in the UE-to-UE scenario, and the second UE is a target remote UE in the UE-to-UE scenario.

16. A method for triggering relay user equipment (UE) selection and reselection for a UE-to-UE scenario, performed by a UE, comprising:
in response to sidelink reference signal received power (SL-RSRP) or sidelink discovery reference signal received power (SD-RSRP) between the UE and another UE satisfying a trigger condition for relay UE selection and reselection, triggering the relay UE selection and reselection.

17. The method according to claim 16, wherein the SL-RSRP or the SD-RSRP satisfying the trigger condition for the relay UE selection and reselection comprises:
the SL-RSRP or the SD-RSRP being less than or equal to a predefined threshold; or
the SL-RSRP or the SD-RSRP being less than a predefined threshold by at least one hysteresis parameter value.

18. The method according to claim 16 or 17, wherein
the UE is a source remote UE in the UE-to-UE scenario, and the other UE is a target remote UE in the UE-to-UE scenario;
the UE is a target remote UE in the UE-to-UE scenario, and the other UE is a source remote UE in the UE-to-UE scenario; or
the UE is a source remote UE or a target remote UE in the UE-to-UE scenario, and the other UE is a relay UE in the UE-to-UE scenario.

19. A communication apparatus, comprising:
a processing module, configured to determine candidate relay user equipments (UEs) according to a first selection condition; and
the processing module being also configured to determine a selected or reselected target relay UE according to the candidate relay UEs;
wherein the first selection condition comprises one of:
selecting a relay UE comprising a UE identifier of a second UE in a notification message or a neighboring cell list as a candidate relay UE, wherein the second UE is a target communication UE for the first UE, and the first UE communicates with the second UE through the relay UE;
selecting a relay UE with sidelink reference signal received power (SL-RSRP) or sidelink discovery reference signal received power (SD-RSRP) satisfying a threshold condition as a candidate relay UE; or
selecting a relay UE comprising a UE identifier of a second UE in a notification message or a neighboring cell list and with an SL-RSRP or an SD-RSRP satisfying a threshold condition as a candidate relay UE.

20. A communication apparatus, comprising:
a processing module, configured to determine candidate relay user equipments (UEs) according to a second selection condition; and
the processing module being also configured to determine a selected or reselected target relay UE according to the candidate relay UEs;
wherein the second selection condition comprises one of:
selecting a relay UE with sidelink reference signal received power (SL-RSRP) or sidelink discovery reference signal received power (SD-RSRP) between a first UE and the relay UE satisfying a first threshold condition as a candidate relay UE; or
selecting a relay UE with an SL-RSRP or an SD-RSRP between the first UE and the relay UE satisfying a first threshold condition and with an SL-RSRP or an SD-RSRP between the second UE and the relay UE satisfying a second threshold condition as a candidate relay UE;
wherein the first UE is a source remote UE in the UE-to-UE scenario, and the second UE is a target remote UE in the UE-to-UE scenario.

21. A communication apparatus, comprising:
a transceiving module, configured to receive a discovery request message sent by at least one first relay user equipment (UE); and
a processing module, configured to select, from the at least one first relay UE, a relay UE with sidelink reference signal received power (SL-RSRP) or sidelink discovery reference signal received power (SD-RSRP) between the relay UE and a second UE satisfying a second threshold condition as a second relay UE; and
the transceiving module being also configured to send a discovery response message to a first UE through the second relay UE, the second relay UE being used by the first UE for relay UE selection and reselection;
wherein the first UE is a source remote UE in the UE-to-UE scenario, and the second UE is a target remote UE in the UE-to-UE scenario.

22. A communication apparatus, comprising:
a processing module, configured to determine candidate relay user equipments (UEs) according to a third selection condition; and
the processing module being also configured to determine a selected or reselected target relay UE according to the candidate relay UEs;
wherein the third selection condition comprises one of:
selecting a relay UE with sidelink reference signal received power (SL-RSRP) or sidelink discovery reference signal received power (SD-RSRP) between a second UE and the relay UE satisfying a second threshold condition as a candidate relay UE; or
selecting a relay UE with an SL-RSRP or an SD-RSRP between a first UE and the relay UE satisfying a first threshold condition and with an SL-RSRP or an SD-RSRP between a second UE and the relay UE satisfying a second threshold condition as a candidate relay UE;
wherein the first UE is a source remote UE in the UE-to-UE scenario, and the second UE is a target remote UE in the UE-to-UE scenario.

23. A communication apparatus, comprising:
a processing module, configured to select a relay user equipment (UE) with sidelink reference signal received power (SL-RSRP) or sidelink discovery reference signal received power (SD-RSRP) between the relay UE and a first UE satisfying a first threshold condition as a third relay UE; and
a transceiving module, configured to send a discovery request message to a second UE through the third relay UE, the third relay UE being used by the second UE for relay UE selection and reselection;
wherein the first UE is a source remote UE in the UE-to-UE scenario, and the second UE is a target remote UE in the UE-to-UE scenario.

24. A communication apparatus, applied to a user equipment (UE), comprising:
a processing module, configured to, in response to sidelink reference signal received power (SL-RSRP) or sidelink discovery reference signal received power (SD-RSRP) between the UE and another UE satisfying a trigger condition for relay UE selection and reselection, trigger the relay UE selection and reselection.

25. A communication apparatus, comprising a processor and a memory, wherein the memory stores a computer program, and the processor executes the computer program stored in the memory, so that the apparatus executes the method according to any one of claims 1-5.

26. A communication apparatus, comprising a processor and a memory, wherein the memory stores a computer program, and the processor executes the computer program stored in the memory, so that the apparatus executes the method according to any one of claims 6 to 9.

27. A communication apparatus, comprising a processor and a memory, wherein the memory stores a computer program, and the processor executes the computer program stored in the memory, so that the apparatus performs the method according to claim 10.

28. A communication apparatus, comprising a processor and a memory, wherein the memory stores a computer program, and the processor executes the computer program stored in the memory, so that the apparatus executes the method according to any one of claims 11 to 14.

29. A communication apparatus, comprising a processor and a memory, wherein the memory stores a computer program, and the processor executes the computer program stored in the memory, so that the apparatus executes the method according to claim 15.

30. A communication apparatus, comprising a processor and a memory, wherein the memory stores a computer program, and the processor executes the computer program stored in the memory, so that the apparatus executes the method according to any one of claims 16 to 18.

31. A computer-readable storage medium for storing instructions, wherein when the instructions are executed, the method according to any one of claims 1-5 is caused to be implemented.

32. A computer-readable storage medium for storing instructions, wherein when the instructions are executed, the method according to any one of claims 6 to 9 is caused to be implemented.

33. A computer-readable storage medium for storing instructions, wherein when the instructions are executed, the method according to claim 10 is caused to be implemented.

34. A computer-readable storage medium for storing instructions, wherein when the instructions are executed, the method according to any one of claims 11 to 14 is caused to be implemented.

35. A computer-readable storage medium for storing instructions, wherein when the instructions are executed, the method according to claim 15 is caused to be implemented.

36. A computer-readable storage medium for storing instructions, wherein when the instructions are executed, the method according to any one of claims 16 to 18 is caused to be implemented.
